(19) **Europäisches Patentamt / European Patent Office / Office européen des brevets**

(11) **EP 4 734 403 A1**

(12) **EUROPEAN PATENT APPLICATION**
published in accordance with Art. 153(4) EPC

(43) Date of publication:
**29.04.2026 Bulletin 2026/18**

(21) Application number: **23951727.9**

(22) Date of filing: **11.09.2023**

(51) International Patent Classification (IPC):
***H04B 10/61*** *(2013.01)*

(52) Cooperative Patent Classification (CPC):
**H04B 10/61**

(86) International application number:
**PCT/CN2023/118078**

(87) International publication number:
**WO 2025/054780 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **GAO, Kuandong**
  **Shenzhen, Guangdong 518129 (CN)**
- **HUANG, Huang**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57) Embodiments of this application relate to the field of communication, and provide a communication method and apparatus, so that data demodulation performance can be improved during terahertz THz data transmission. The method includes: A receive-end device receives a plurality of reception signals, where the plurality of reception signals include a first group of signals and a second group of signals, and the first group of signals and the second group of signals each include at least one reception signal; performs a joint operation on the first group of signals and the second group of signals, to obtain a first value; and determines, based on the first value, sending data separately corresponding to the plurality of reception signals.

FIG. 15

**Description**

**TECHNICAL FIELD**

This application relates to the field of communication, and in particular, to a communication method and apparatus.

**BACKGROUND**

With increasing communication requirements, high frequency has emerged as a research hotspot in the industry due to abundant spectrum resources, and has significant features of a large bandwidth, a highly integrated antenna array, and high throughput. However, severe high-frequency phase noise (phase noise, PHN) introduces a common phase error (common phase error, CPE) in a frequency domain dimension of a cyclic prefix (cyclic prefix, CP)-orthogonal frequency division multiplexing (orthogonal frequency division multiplexing, OFDM) waveform and a discrete Fourier transform-spread-orthogonal frequency division multiplexing (discrete Fourier transform-spread-orthogonal frequency division multiplexing, DFT-s-OFDM) waveform, severely affecting data demodulation performance.

For non-negligible high-frequency phase noise, a discrete phase noise reference signal (phase-tracking reference signal, PTRS) is currently supported to estimate the PHN, and compensation is performed based on an estimated value. However, during terahertz (terahertz, THz) data transmission, the PHN cannot be estimated by using the PTRS, reducing data demodulation performance.

**SUMMARY**

Embodiments of this application provide a communication method and apparatus that can improve data demodulation performance.

A first aspect provides a communication method. The method may be performed by a receive-end device; or may be performed by a component of a receiving device, for example, a processor, a chip, or a chip system of the receiving device; or may be implemented by a logic module or software that can implement all or some functions of a receiving device. The method includes: receiving a plurality of reception signals, where the plurality of reception signals include a first group of signals and a second group of signals, and the first group of signals and the second group of signals each include at least one reception signal; performing a joint operation on the first group of signals and the second group of signals, to obtain a first value; and determining, based on the first value, sending data separately corresponding to the plurality of reception signals.

Based on this solution, because there is phase noise PHN in a reception signal and the receive-end device cannot estimate the PHN during demodulation, the receive-end device divides the plurality of received reception signals into two groups, performs the joint operation on the two groups of signals to obtain a constant value (namely, the first value) unrelated to the PHN, and then implements data demodulation based on the constant value. In other words, in embodiments of this application, the PHN does not need to be considered during data demodulation. Compared with a solution of data demodulation implemented by estimating the PHN, this solution can improve data demodulation performance, that is, improve data transmission performance.

In a possible design, the joint operation includes multiplication on the second group of signals and a conjugate value of the first group of signals.

In a possible design, the joint operation includes division on the first group of signals and the second group of signals.

Based on the foregoing two possible designs, the receive-end device may perform the joint operation on the first group of signals and the second group of signals, to obtain the constant value (that is, the first value) unrelated to the PHN, so that the sending data separately corresponding to the plurality of reception signals can be determined based on the first value, avoiding impact of the PHN on data demodulation performance, and improving data demodulation performance, that is, improving data transmission performance.

In a possible design, determining, based on the first value, the sending data separately corresponding to the plurality of reference signals includes: determining a plurality of pieces of data corresponding to the first value in a first correspondence as the sending data separately corresponding to the plurality of reception signals, where the first correspondence includes a correspondence between a value and a plurality of pieces of data.

In a possible design, performing the joint operation on the first group of signals and the second group of signals, to obtain the first value includes: combining the first group of signals to obtain a first combined signal corresponding to the first group of signals, where the first combined signal is a result obtained by performing at least one of multiplication, addition, subtraction, and division on the first group of signals; combining the second group of signals to obtain a second combined signal corresponding to the second group of signals, where the second combined signal is a result obtained by performing at least one of multiplication, addition, subtraction, and division on the second group of signals; and performing the joint operation on the first combined signal and the second combined signal, to obtain the first value.

In a possible design, a quantity of reception signals in the first group of signals and a quantity of reception signals in the second group of signals are both even.

In a possible design, the reception signal is a single-carrier signal, and the single-carrier signal includes a single-carrier offset quadrature amplitude modulation SC-OQAM signal, a single-carrier quadrature amplitude modulation SC-QAM signal, and a discrete Fourier transform-spread-orthogonal frequency division multiplexing DFT-s-OFDM signal.

Based on this possible design, compared with a multi-carrier signal, the single-carrier signal has a lower peak to average power ratio PAPR, that is, lower signal sending power. Therefore, a signal can be sent with low sending power, thereby reducing costs of a transmit-end device, improving transmission power efficiency of the transmit-end device, and prolonging a service life of a battery of the transmit-end device.

In a possible design, the plurality of reception signals are located in a same resource block RB, or the plurality of reception signals are located in adjacent RBs.

In a possible design, the first group of signals includes a first reception signal and a second reception signal, the first reception signal is a reception signal corresponding to a real part of first sending data, and the second reception signal is a reception signal corresponding to an imaginary part of the first sending data; and/or the second group of signals includes a third reception signal and a fourth reception signal, the third reception signal is a reception signal corresponding to a real part of second sending data, and the fourth reception signal is a reception signal corresponding to an imaginary part of the second sending data.

A second aspect provides a communication apparatus to implement various methods. The communication apparatus may be the receive-end device in the first aspect or an apparatus included in the receive-end device, such as a chip or a chip system. The communication apparatus includes a corresponding module, unit, or means (means) for implementing the method. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any possible implementations thereof. The transceiver module may include a receiving module and a sending module that are respectively configured to implement a receiving function and a sending function in any one of the foregoing aspects and any possible implementations thereof.

In some possible designs, the transceiver module may include a transceiver circuit, a transceiver device, a transceiver, or a communication interface.

A third aspect provides a communication apparatus, including a processor and a memory. The memory is configured to store computer instructions. When the processor executes the instructions, the communication apparatus is enabled to perform the method according to any one of the aspects. The communication apparatus may be the receive-end device in the first aspect or an apparatus included in the receive-end device, such as a chip or a chip system.

A fourth aspect provides a communication apparatus, including a processor and a communication interface. The communication interface is configured to communicate with a module other than the communication apparatus, and the processor is configured to execute a computer program or instructions, to enable the communication apparatus to perform the method according to any one of the aspects. The communication apparatus may be the receive-end device in the first aspect or an apparatus included in the receive-end device, such as a chip or a chip system.

A fifth aspect provides a communication apparatus, including at least one processor. The processor is configured to execute a computer program or instructions stored in a memory, to enable the communication apparatus to perform the method according to any one of the aspects. The memory may be coupled to the processor, or may be independent of the processor. The communication apparatus may be the receive-end device in the first aspect or an apparatus included in the receive-end device, such as a chip or a chip system.

In some possible designs, the communication apparatus includes a memory, and the memory is configured to store necessary program instructions and data.

In some possible designs, when the apparatus is a chip system, the chip system may include a chip, or may include a chip and another discrete component.

It can be understood that, when the communication apparatus provided in any one of the second aspect to the fifth aspect is a chip, a sending action/function of the communication apparatus may be understood as outputting information, and a receiving action/function of the communication apparatus may be understood as inputting information.

A sixth aspect provides a computer-readable storage medium. The computer-readable storage medium stores a computer program or instructions. When the computer program or instructions are run on a communication apparatus, the communication apparatus is enabled to perform the method according to any one of the aspects.

A seventh aspect provides a computer program product including instructions. When the computer program product is run on a communication apparatus, the communication apparatus is enabled to perform the method according to any one of the aspects.

An eighth aspect provides a chip, including a processor. The processor is coupled to a memory. The memory is configured to store a program or instructions. When the program or instructions are executed by the processor, the chip is enabled to perform the method according to any one of the aspects.

A ninth aspect provides a system, including the transmit-end device provided in any one of the second aspect to the fifth aspect or an apparatus included in the transmit-end device, and an apparatus included in the receive-end device provided in any one of the second aspect to the fifth aspect.

For technical effects achieved by any one of the designs in the second aspect to the fifth aspect, refer to the technical effects achieved by the first aspect. Details are not described herein again.

**BRIEF DESCRIPTION OF DRAWINGS**

FIG. 1 shows a signal power spectrum according to an embodiment of this application;
FIG. 2 shows a multi-carrier spectrum according to an embodiment of this application;
FIG. 3 is a diagram of generating and receiving a signal according to an embodiment of this application;
FIG. 4 is a block diagram of implementations of an SC-QAM signal and an SC-OQAM signal in time domain according to an embodiment of this application;
FIG. 5 shows a waveform of an SC-QAM signal according to an embodiment of this application;
FIG. 6 shows a waveform of an SC-OQAM signal according to an embodiment of this application;
FIG. 7 is a block diagram of an implementation of an SC-OQAM signal in frequency domain according to an embodiment of this application;
FIG. 8 is a diagram of performing frequency-domain filtering on a signal according to an embodiment of this application;
FIG. 9 is a graph of a curve in which a phase changes with time according to an embodiment of this application;
FIG. 10 shows impact of phase noise on a constellation point according to an embodiment of this application;
FIG. 11 is a schematic flowchart of generating and receiving a signal according to an embodiment of this application;
FIG. 12 is another schematic flowchart of generating and receiving a signal according to an embodiment of this application;
FIG. 13 is a diagram of a structure of a communication system according to an embodiment of this application;
FIG. 14 is a diagram of a structure of another communication system according to an embodiment of this application;
FIG. 15 is a schematic flowchart of a communication method according to an embodiment of this application;
FIG. 16 is a diagram of a structure of a communication apparatus according to an embodiment of this application;
FIG. 17 is a diagram of a structure of another communication apparatus according to an embodiment of this application; and
FIG. 18 is a diagram of a structure of still another communication apparatus according to an embodiment of this application.

**DESCRIPTION OF EMBODIMENTS**

In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A or B may be singular or plural.

In the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

In addition, to clearly describe the technical solutions in embodiments of this application, terms such as "first" and "second" are used in embodiments of this application to distinguish between same items or similar items that provide basically same functions and effects. A person skilled in the art may understand that the terms such as "first" and "second" do not limit a quantity or an execution sequence, and the terms such as "first" and "second" do not indicate a definite difference.

In embodiments of this application, the word such as "example" or "for example" is intended to indicate giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

It may be understood that the "embodiment" mentioned throughout this specification means that particular features, structures, or characteristics related to the embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean an execution sequence in various embodiments of this application. The execution sequence of the processes should be determined based on functions and internal logic of the processes, and should not be construed as any limitation on the implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, mutual reference may be made between same or similar parts of various embodiments. In various embodiments of this application and various implementations/implementation methods in various embodiments, unless otherwise specified or a logic conflict occurs, terms and/or descriptions are consistent and may be mutually referenced between different embodiments and between the implementations/implementation methods in the embodiments. Technical features in the different embodiments and the implementations/implementation methods in the embodiments may be combined based on an internal logic relationship thereof to form a new embodiment, implementation, or implementation method. The following implementations of this application are not intended to limit the protection scope of this application.

For ease of understanding of the technical solutions in embodiments of this application, the following first briefly describes technologies related to this application.

1. Resource unit, resource block (resource block, RB), and transport block (transport block, TB):

A resource unit may be a physical resource at specific granularity. For example, the resource unit may be the smallest resource unit of physical resources, and the resource unit may also be referred to as a resource element (resource element, RE) or a resource particle. Alternatively, the resource unit may be a physical resource including a plurality of resource units. Alternatively, the resource unit may be another defined physical resource. For example, the resource unit indicates duration in time domain, and indicates a bandwidth in frequency domain. This is not limited in this application. In another example, the resource unit indicates an OFDM symbol in time domain, and indicates a resource block (resource block, RB) in frequency domain. An RE indicates an orthogonal frequency division multiplexing (orthogonal frequency division multiplexing, OFDM) symbol in time domain, and indicates a subcarrier in frequency domain.

An RB includes a plurality of subcarriers or a plurality of REs. For example, one RB includes 12 subcarriers. The RB may be classified into different types, and all types of RBs may include different quantities of subcarriers and different subcarrier number ranges. The RB may be the smallest unit of scheduled resources.

A TB is a data information block to be encoded. The TB is a basic unit for data exchange between a medium access control (medium access control, MAC) sublayer and a physical layer. A cyclic check bit may be added after the transport block for check.

2. Modulation and coding parameter:

The modulation and coding parameter may include one or more of the following: a modulation and coding scheme (modulation and coding scheme, MCS) index, a modulation order (Modulation Order), a coding rate (coding rate, code rate for short), or spectral efficiency (spectral efficiency, SE). The coding rate indicates a ratio of raw data bits to coded data bits. The spectral efficiency indicates a quantity of raw data bits that can be transmitted on one subcarrier.

The MCS is a scheme for coding and modulating raw data bits. The MCS may include three parameters: a modulation order, a coding rate, and spectral efficiency. A combination of the three parameters may be represented by using the MCS index (index), as shown in Table 1. An MCS index is used to uniquely identify one MCS.

Table 1

| MCS index | Modulation order | Target coding rate | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved | |
| 30 | 4 | Reserved | |
| 31 | 6 | Reserved | |

In Table 1, the second column is a modulation order. For example, 2, 4, and 6 represent QPSK, 16QAM, and 64QAM respectively. The target coding rate in the third column indicates a product of a coding rate (for example, represented by R) and 1024, where R < 1. For example, 120 in the first row and the third column in Table 1 represents R*1024, that is, the coding rate R = 120/1024 = 0.1172.

It should be noted that the modulation and coding scheme may also be referred to as a modulation and coding strategy. The MCS index may also be referred to as an MCS number, and the MCS index and the MCS number are interchangeable.

3. Peak to average power ratio (peak to average power ratio, PAPR):

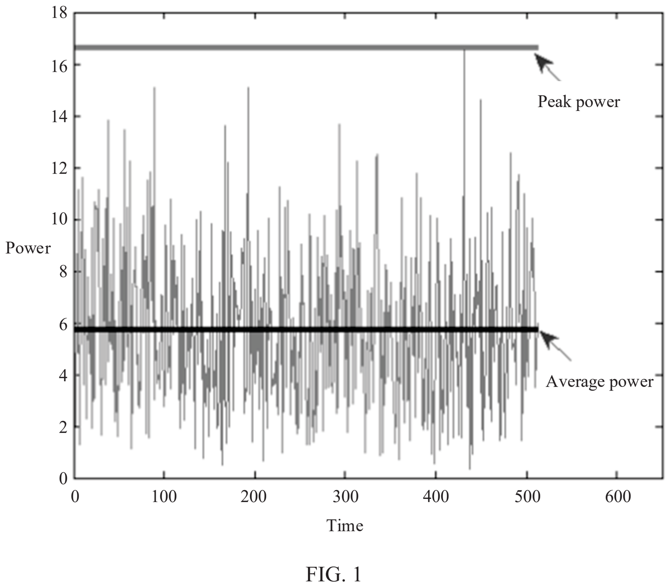

As shown in FIG. 1, from the perspective of time domain, a radio signal is a sinusoidal wave with varying amplitude, where the amplitude is not constant. A peak signal amplitude in a cycle is also different from a peak signal amplitude in another cycle. Therefore, average power and peak power of the radio signal in each cycle are different. The peak power is maximum transient power that occurs at a preset probability (usually 1%, that is, $10^{-2}$) within a period of time. The PAPR is a ratio of the peak power to the average power of a system.

The PAPR of the system is related to the following two factors:

(1) PAPR of a baseband signal: The PAPR of the baseband signal is positively correlated with the PAPR of the system. For example, if a PAPR of a baseband signal modulated based on 1024-quadrature amplitude modulation (quadrature amplitude modulation, QAM) is large, the PAPR of the system is large. In another example, if a PAPR of a baseband signal modulated based on quadrature phase shift keying (quadrature phase shift keying, QPSK) and binary phase shift keying (binary phase shift keying, BPSK) is small, the PAPR of the system is small. The signal amplitude of the baseband signal modulated based on QPSK and BPSK is constant. Therefore, the PAPR of the baseband signal modulated based on QPSK and BPSK is 1.

(2) PAPR introduced by multi-carrier superposition: The PAPR introduced by multi-carrier superposition is positively correlated with the PAPR of the system.

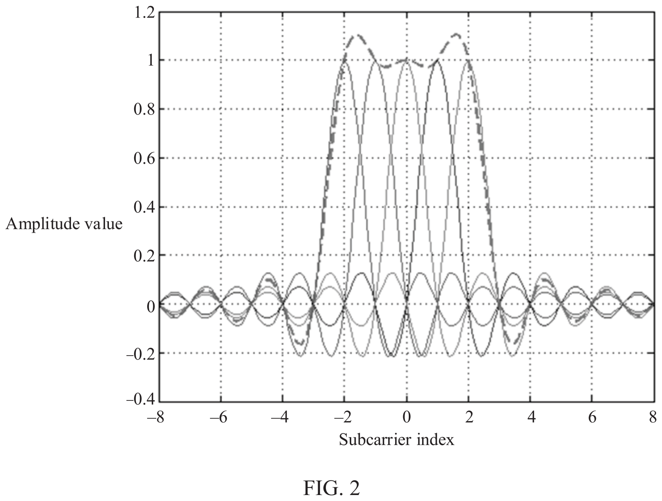

For example, in an OFDM system, a multi-carrier spectrum is shown in FIG. 2. It can be learned from FIG. 2 that, a signal on each single carrier (that is, a signal corresponding to a waveform obtained in FIG. 2) is expressed as a sinc (sinc) function. To be specific, the signal exhibits tails on two sides of a wave peak. Tails of a plurality of carriers may be superposed at a location, forming a point with very high peak power. This may cause a large PAPR of the system. A dashed waveform in FIG. 2 exhibits signal amplitudes obtained after a plurality of carriers with different subcarrier indexes are superposed.

In a wireless system, power amplification increases signal strength of a signal, so that the signal can be sent over great distances. However, due to technical and device cost limitations, a power amplifier can linearly amplify power of a signal only when operating in a linear operating region, and then a receive-end device can correctly parse the signal. When the PAPR is excessively high, the power amplifier operates in a non-linear region, resulting in signal distortion. Consequently, the receive-end device for the signal cannot correctly parse the signal. Therefore, power back-off is required to ensure that the peak power of the signal is within the range. However, this greatly reduces efficiency of the amplifier, that is, reduces coverage of the signal.

4. Cyclic prefix (cyclic prefix, CP)-OFDM signal:

A CP-OFDM signal is obtained by mapping a modulated modulation symbol to a frequency-domain subcarrier, then performing Fourier transform on the modulated modulation symbol, and then adding a cyclic prefix to a transformed signal.

5. Discrete Fourier transform-spread-OFDM (discrete Fourier transform-spread-orthogonal frequency division multiplexing, DFT-s-OFDM) signal:

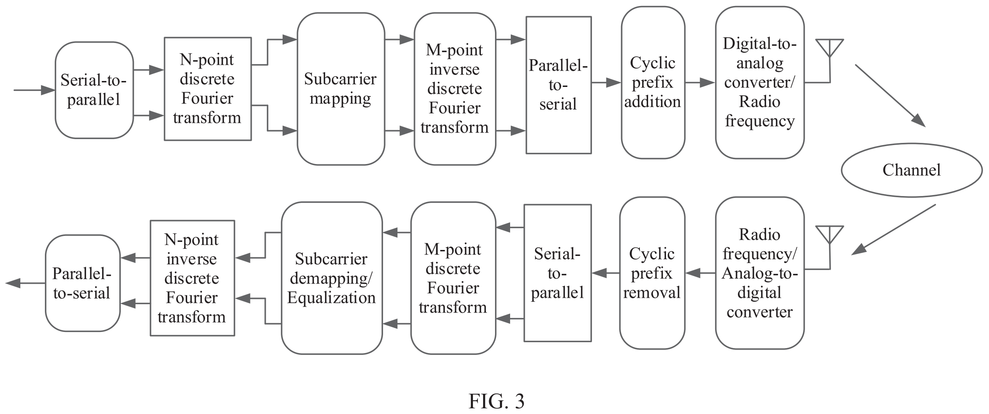

A DFT-s-OFDM signal is obtained after a CP-OFDM signal is transformed. FIG. 3 is a diagram of generating and receiving the DFT-s-OFDM signal. A transmit-end device performs serial-to-parallel (serial-to-parallel, s-to-p) conversion on N-point modulation symbols generated through encoding, and then performs N-point discrete Fourier transform (N-point discrete Fourier transform, N-point, DFT). After transforming the modulation symbol to frequency domain, the transmit-end device filters the modulation symbol in frequency domain, or directly maps the modulation symbol in frequency domain to a frequency-domain subcarrier without filtering, that is, performs subcarrier mapping. Then, the transmit-end device performs M-point inverse discrete Fourier transform (M-point inverse discrete Fourier transform, M-point IDFT) and parallel-to-serial (parallel-to-serial, p-to-s) conversion. Finally, the transmit-end device adds a cyclic prefix (add CP) to obtain a DFT-s-OFDM signal to be sent. Then, the transmit-end device sends the DFT-s-OFDM signal by using a digital-to-analog converter (digital-to-analog converter, DAC) or a radio frequency (radio frequency, RF) component.

After receiving the signal by using an RF component or an analog-to-digital converter (analog-to-digital converter, ADC), a receive-end device removes the CP from the received signal, performs s-to-p conversion, performs M-point DFT, and performs subcarrier demapping (subcarrier demapping) or equalization (equalization). The receive-end device performs N-point inverse discrete Fourier transform (inverse discrete Fourier transform, IDFT) and p-to-s conversion, and then inputs the signal to a demodulator for demodulation (detect).

The DFT-s-OFDM signal is a single-carrier signal. Therefore, compared with the CP-OFDM signal, the DFT-s-OFDM signal has a lower PAPR, that is, lower signal sending power. In other words, compared with the CP-OFDM signal, the DFT-s-OFDM signal can be sent with low sending power, thereby reducing costs of the transmit-end device, improving transmission power efficiency of the transmit-end device, and prolonging a service life of a battery of the transmit-end device.

However, a broadband signal in high-frequency communication, for example, the CP-OFDM signal and the DFT-s-OFDM signal, has a large PAPR. This can cause severe distortion in a power component due to excessively high sending power. Therefore, to reduce signal sending power, the high-frequency communication requires a waveform with a low PAPR.

6. Single-carrier quadrature amplitude modulation (single-carrier quadrature amplitude modulation, SC-QAM) signal and single-carrier offset quadrature amplitude modulation (single-carrier offset quadrature amplitude modulation, SC-OQAM) signal:

(1) Implementations of an SC-QAM signal and an SC-OQAM signal in time domain:

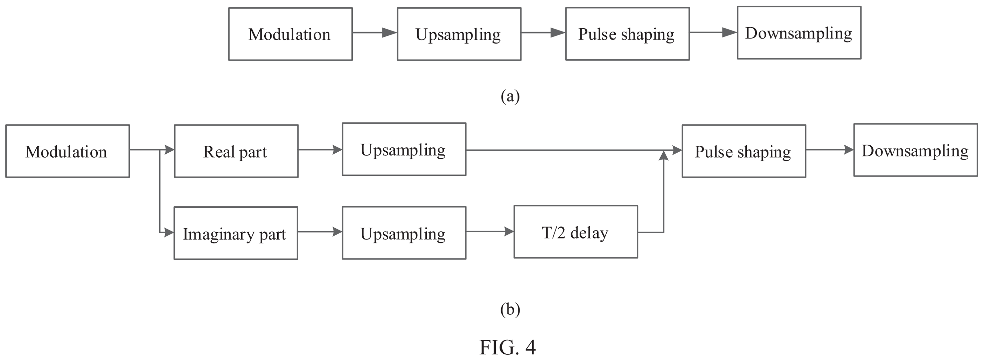

(a) in FIG. 4 is a block diagram of an implementation of the SC-QAM signal in time domain. As shown in (a) in FIG. 4, a transmit-end device modulates data information (that is, encoded information 0 and 1) into a modulated signal. The modulated signal may be a QAM-modulated signal, a phase-modulated signal, or another modulated signal. The transmit end then performs double upsampling on the modulated signal (that is, repeats the modulated signal) to obtain an upsampled signal, then performs pulse shaping on the upsampled signal, and then performs downsampling on the filtered signal to obtain the SC-QAM signal. The pulse shaping is filtering performed on the signal by using a filter, and the downsampling is extraction performed on the signal.

(b) in FIG. 4 is a block diagram of an implementation of the SC-OQAM signal in time domain. As shown in (b) in FIG. 4, a transmit-end device modulates data information into a modulated signal, separates a real part and an imaginary part of the modulated signal, and then performs upsampling separately on the real part signal and the imaginary part signal to obtain an upsampled real part signal and an upsampled imaginary part signal. In addition, the upsampled imaginary part signal is delayed by T/2 to obtain a delayed imaginary part signal. Then, pulse shaping and downsampling are performed on the upsampled real part signal and the delayed imaginary part signal to obtain the SC-OQAM signal.

The following compares the two signals in terms of a waveform of the SC-QAM signal and a waveform of the SC-OQAM signal.

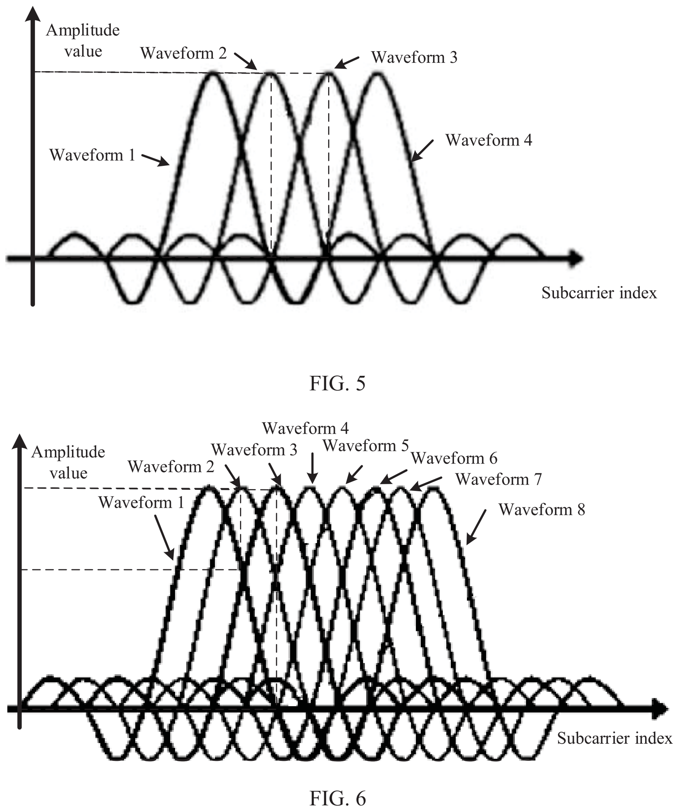

The waveform of the SC-QAM signal is shown in FIG. 5, and the SC-QAM signal carries a complex signal. Four waveforms in FIG. 5 carry SC-QAM signals of different signals. A waveform 2 is a next waveform of a waveform 1, a waveform 3 is a next waveform of the waveform 2, and a waveform 4 is a next waveform of the waveform 3. At a peak of the waveform 2, an amplitude value of the waveform 1 is 0. At a peak of the waveform 3, an amplitude value of the waveform 2 is 0. At a peak of the waveform 4, an amplitude value of the waveform 3 is 0. Therefore, it may be considered that two adjacent SC-QAM waveforms are in a quadrature relationship.

The waveform of the SC-OQAM signal is shown in FIG. 6, and each SC-OQAM waveform carries a real part signal or an imaginary part signal. In FIG. 6, a waveform 1, a waveform 3, a waveform 5, and a waveform 7 carry different real part signals, and a waveform 2, a waveform 4, a waveform 6, and a waveform 8 carry different imaginary part signals. The waveform 2 is a next waveform of the waveform 1, the waveform 3 is a next waveform of the waveform 2, and so on, and the waveform 8 is a next waveform of the waveform 7. At a peak of the waveform 2, an amplitude value of the waveform 1 is not 0; but at a peak of the waveform 3, an amplitude value of the waveform 1 is 0. At a peak of the waveform 3, an amplitude value of the waveform 2 is not 0; but at a peak of the waveform 4, an amplitude value of the waveform 2 is 0, and so on. At a peak of the waveform 7, an amplitude value of the waveform 6 is not 0; but at a peak of the waveform 8, an amplitude value of the waveform 6 is 0. Therefore, it may be considered that two adjacent SC-QAM waveforms that both carry real part signals are in a quadrature relationship, two adjacent SC-QAM waveforms that both carry imaginary part signals are in a quadrature relationship, and an SC-QAM waveform that carries a real part signal and a neighboring SC-QAM waveform that carries an imaginary part signal are in a non-quadrature relationship.

In addition, in the SC-OQAM signals, an actual amplitude peak of a real part signal (that is, an actual wave peak of an SC-QAM waveform that carries the real part signal) is obtained through superposition of an amplitude peak of the real part signal and a non-amplitude peak of a neighboring imaginary part signal (for example, the real part signal carried by the waveform 3 is adjacent to the imaginary part signals carried by the waveform 2 and the waveform 4); and an actual amplitude peak of an imaginary part signal is an amplitude peak of the imaginary part signal and a non-amplitude peak of a neighboring real part signal (for example, the imaginary part signal carried by the waveform 4 is adjacent to the real part signals carried by the waveform 3 and the waveform 5). Compared with the SC-QAM signal, the SC-OQAM signal is sent under signal strength same as that of the SC-QAM signal, but with lower sending power. In other words, compared with the SC-QAM signal, the SC-OQAM signal can reduce signal sending power, and then reduce the PAPR of the system.

(2) Implementation of an SC-OQAM signal in frequency domain:

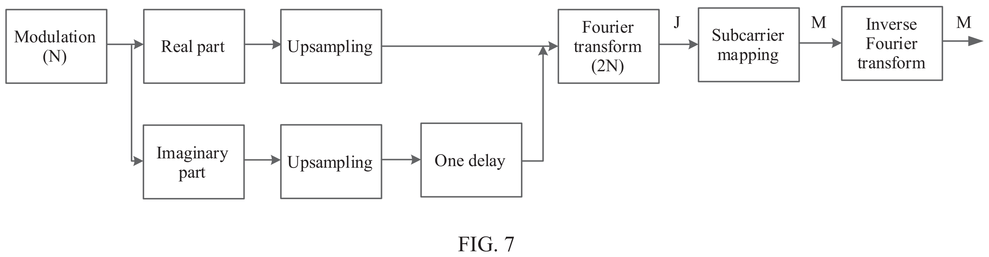

FIG. 7 is a block diagram of an implementation of the SC-OQAM signal in frequency domain. As shown in FIG. 7, a transmit-end device splits a QAM constellation point used in an OFDM system into a real part and an imaginary part, or directly defines an input as a pulse amplitude modulation (pulse amplitude modulation, PAM) signal. Then, the transmit-end device performs double upsampling on the signal, that is, changes the real part signal to [X, 0, X, 0, X, 0, ...] and changes the imaginary part signal to [jY, 0, jY, 0, jY, 0, ...], and then delays the imaginary part signal, so that the imaginary part signal changes to [0, jY, 0, jY, 0, jY, ...]. Then, the real part signal and the imaginary part signal are combined into [X, jY, X, jY, X, jY, ...]. It can be learned that a total length of the signal is twice that of the original modulation signal. Then, the transmit-end device performs 2N-point Fourier transform (for example, DFT or fast Fourier transform (fast Fourier transform, FFT)) on a symbol obtained after phase rotation or real and imaginary part separation, to transform a time-domain signal into a frequency-domain signal. N is a positive integer.

After the transmit-end device splits the QAM constellation point into the real part and the imaginary part, the length of the signal is twice that in conventional QAM constellation modulation. Therefore, a quantity of points for Fourier transform is also twice a quantity of points for Fourier transform in the QAM constellation modulation. Therefore, data obtained after the transmit-end device performs Fourier transform has redundancy, and the transmit end may perform truncation-based frequency-domain filtering on a redundant signal. The truncation means that a bandwidth of a filter is less than a bandwidth obtained after Fourier transform.

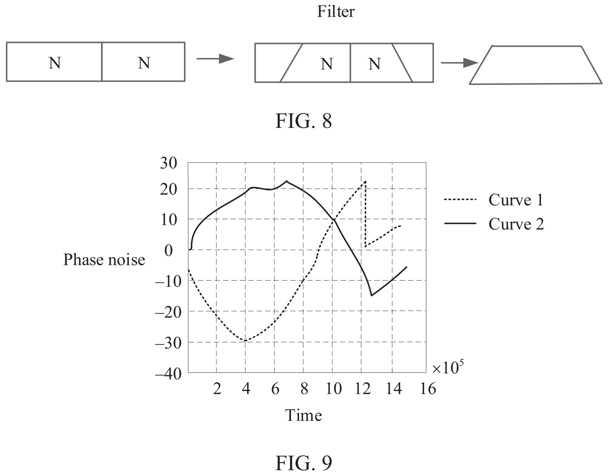

Specifically, FIG. 8 is a diagram in which the transmit-end device performs frequency-domain filtering. To be specific, if a bandwidth obtained after Fourier transform is 2N, the transmit-end device may design a length of a frequency-domain filter as 2J points, where J is less than or equal to N, and J is a positive integer. In a filtering process, the frequency-domain filter is directly multiplied by a signal obtained after Fourier transform. When J is less than N, all values in 2Z points are not 0. When J is equal to N, some values in 2J points are 0. Because the signal has redundancy, the truncation-based filtering does not cause a performance loss. Finally, the transmit-end device performs zero padding and M-point IFFT, and then adds a CP, to obtain the SC-OQAM signal, where M is a positive integer.

In conclusion, regardless of whether the transmit-end device generates the SC-OQAM signal in time domain or generates the SC-OQAM signal in frequency domain, the SC-OQAM signal is a signal with the real part and the imaginary part separated. For example, the SC-OQAM signal may be [X, jY, X, jY, X, jY, ...] or [jY, X, jY, X, jY, X, ...]. Therefore, when receiving the real part signal in the SC-OQAM signal, the receive-end device discards the imaginary part signal; or when receiving the imaginary part signal in the SC-OQAM signal, the receive-end device discards the real part signal, so that information can be restored.

7. Phase noise (phase noise, PHN):

The PHN is a random change in a phase, caused by various noises, of an output signal of a communication device (for example, various radio frequency components) that sends the signal.

High frequency can provide a large bandwidth and a highly integrated antenna array for communication, to achieve high throughput. Therefore, to meet increasing communication requirements, a communication system increasingly requires high-frequency-band (millimeter wave bands, mainly including 28 gigahertz (GHz), 39 GHz, 60 GHz, 73 GHz, and the like) resources to transmit signals. However, a PHN problem is particularly pronounced in high frequency bands. As a band increases, a PHN power spectrum density is higher, and then impact on a signal received by the receive-end device is greater. In other words, worsening PHN degrades signal demodulation performance, reducing communication quality.

The impact y(n) of the PHN on the signal may be expressed as follows:

$$y(n) = x(n)e^{j\theta_n} \qquad\qquad (1)$$

Herein, x(n) is a sending signal, $\theta_n$ is a value of PHN, $n$ = 0, 1, ..., N-1, and $n$ is a time-domain sampling point. In other words, the PHN is a random phase value generated at each sampling point $n$ of the signal.

FIG. 9 is a graph of a curve in which a phase changes with time in [-40, 30] degrees. In FIG. 9, a frequency of a signal represented by a curve 2 is higher than a frequency of a signal represented by a curve 1. It can be learned from FIG. 9 that, as a band increases, a phase noise power spectrum density is higher, and then impact on a reception signal is greater. In other words, worsening phase noise degrades demodulation performance.

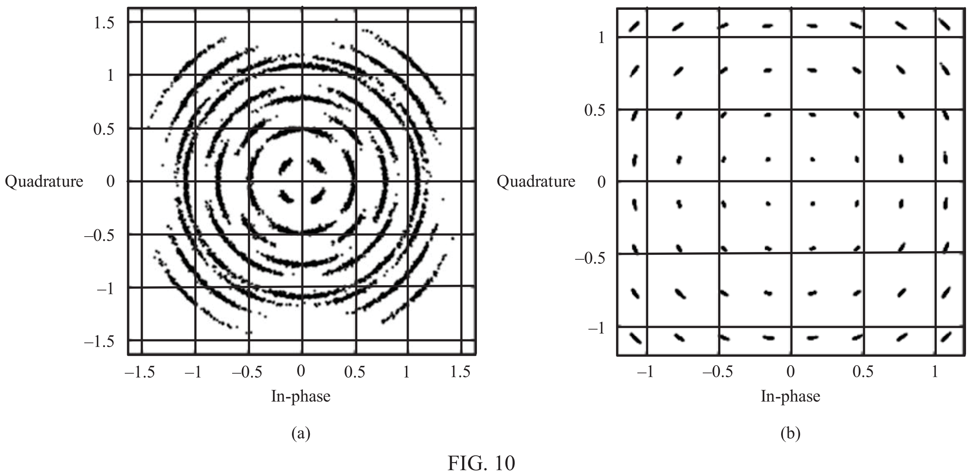

In a new radio (new radio, NR) communication system, a phase tracking reference signal (phase tracking reference signal, PTRS) is introduced for phase compensation, to improve demodulation performance under phase noise conditions. For example, (a) in FIG. 10 shows impact of phase noise on reception performance of a receive-end device when phase noise compensation is not performed, and (b) in FIG. 10 shows impact on reception performance of the receive-end device after phase compensation is performed. It can be learned from FIG. 10 that the reception performance is significantly improved after phase compensation is performed on the signal. The reception performance is positively correlated with the demodulation performance.

For multi-carrier (for example, an OFDM signal) and single-carrier (for example, a DFT-s-OFDM signal) signals, the PTRS may be considered as a part of a modulation symbol. In other words, the modulation symbol is obtained by encoding and modulating data and the PTRS. In this case, a carrier (single-carrier or multi-carrier) sent by a transmit-end device is also formed by processing the data and the PTRS according to the sending procedure in FIG. 3. A location of the PTRS is fixed.

Under phase noise conditions, for the receive-end device, a phase and amplitude of the data are unknown, and a phase and amplitude of the PTRS are known. Therefore, the receive-end device may directly estimate the PHN based on the PTRS and reception data that corresponds to the PTRS and that is received by the receive-end device.

8. PTRS configuration:

(1) PTRS configuration in an OFDM signal:

In uplink and downlink OFDM signals in the current protocol, PTRS configurations are the same, and configuration parameters are the same. A PTRS configuration provided by a network device includes a frequency-domain density configuration and a time-domain density configuration. A time-domain density of a PTRS is related to an MCS index value of data. A range of the MCS index value configured by the network device for the PTRS includes (0, PTRS-MCS1) [PTRS-MCS1, PTRS-MCS2), [PTRS-MCS2, PTRS-MCS3), and [PTRS-MCS3, PTRS-MCS4). Alternatively, the network device may configure different MCS index thresholds for the PTRS, such as PTRS-MCS1, PTRS-MCS2, and PTRS-MCS3. In this case, PTRS-MCS1, PTRS-MCS2, and PTRS-MCS3 correspond to four different ranges: (0, PTRS-MCS1) [PTRS-MCS1, PTRS-MCS2), [PTRS-MCS2, PTRS-MCS3), and [PTRS-MCS3, PTRS-MCS4). When the MCS index value $I_{MCS}$ of data is in different ranges, the PTRS used for the data has different time-domain densities.

As shown in Table 2, when the MCS index value $I_{MCS}$ of the data is in the range (0, PTRS-MCS1), a time-domain density of the PTRS corresponding to the data is 0, indicating that there is no PTRS on a time-domain symbol. When the MCS index value $I_{MCS}$ of the data is in the range [PTRS-MCS1, PTRS-MCS2), a time-domain density of the PTRS corresponding to the data is 4, indicating that there is one PTRS on every four time-domain symbols. When the MCS index value $I_{MCS}$ of the data is in the range [PTRS-MCS2, PTRS-MCS3), a time-domain density of the PTRS corresponding to the data is 2, indicating that there is one PTRS on every two time-domain symbols. When the MCS index value $I_{MCS}$ of the data is in the range [PTRS-MCS2, PTRS-MCS3), a time-domain density of the PTRS corresponding to the data is 1, indicating that there is one PTRS on each time-domain symbol.

Table 2

| MCS index value | Time-domain density |
|---|---|
| $0 < I_{MCS} <$ PTRS-MCS1 | 0 |
| PTRS-MCS1 $\leq I_{MCS} <$ PTRS-MCS2 | 4 |
| PTRS-MCS2 $\leq I_{MCS} <$ PTRS-MCS3 | 2 |
| PTRS-MCS3 $\leq I_{MCS} <$ PTRS-MCS4 | 1 |

A frequency-domain density of a PTRS is related to a scheduled bandwidth of data. To be specific, when the scheduled bandwidth of the data is in different ranges, the PTRS corresponding to the data has different frequency-domain densities. A range of the scheduled bandwidth $N_{RB}$ configured by the network device for the PTRS includes (0, $N_{RB0}$), [$N_{RB0}$, $N_{RB1}$), and [$N_{RB1}$, ∞). Alternatively, the network device may configure different bandwidth thresholds for the PTRS, such as $N_{RB0}$ and $N_{RB1}$. In this case, $N_{RB0}$ and $N_{RB1}$ correspond to three different ranges: (0, $N_{RB0}$), [$N_{RB0}$, $N_{RB1}$), and [$N_{RB1}$, ∞).

As shown in Table 3, when the scheduled bandwidth $N_{RB}$ of the data is in the range (0, $N_{RB0}$), the frequency density of the PTRS corresponding to the data is 0, indicating that there is no PTRS in the bandwidth. When the scheduled bandwidth $N_{RB}$ of the data is in the range [$N_{RB0}$, $N_{RB1}$), the frequency density of the PTRS corresponding to the data is 2, indicating that there is a resource element (resource element, RE) of one PTRS in every two RBs in the bandwidth. When the scheduled bandwidth $N_{RB}$ of the data is in the range [$N_{RB1}$, ∞), the frequency density of the PTRS corresponding to the data is 4, indicating that there is an RE of one PTRS in every four RBs in the bandwidth.

Table 3

| Scheduled bandwidth of data | Frequency-domain density |
|---|---|
| $0 < N_{RB} < N_{RB0}$ | 0 |
| $N_{RB0} \leq N_{RB} < N_{RB1}$ | 2 |
| $N_{RB1} \leq N_{RB} < \infty$ | 4 |

(2) PTRS configuration in a single-carrier signal (the following uses a DFT-s-OFDM signal as an example for description):

A PTRS of the DFT-s-OFDM signal includes only a frequency-domain density configuration. In other words, a density of a PTRS is only related to a scheduled bandwidth of data. To be specific, when the scheduled bandwidth of the data is in different ranges, the PTRS corresponding to the data has different densities. A range of the scheduled bandwidth $N_{RB}$ configured by the network device for the PTRS includes $(0, N_{RB0})$, $[N_{RB0}, N_{RB1})$, $[N_{RB1}, N_{RB2})$, $[N_{RB2}, N_{RB3})$, $[N_{RB3}, N_{RB4})$, and $[N_{RB4}, \infty)$. Alternatively, the network device may configure different bandwidth thresholds for the PTRS, such as $N_{RB0}$, $N_{RB1}$, $N_{RB2}$, $N_{RB3}$, and $N_{RB4}$. In this case, $N_{RB0}$, $N_{RB1}$, $N_{RB2}$, $N_{RB3}$, and $N_{RB4}$ correspond to six different ranges: $(0, N_{RB0})$, $[N_{RB0}, N_{RB1})$, $[N_{RB1}, N_{RB2})$, $[N_{RB2}, N_{RB3})$, $[N_{RB3}, N_{RB4})$, and $[N_{RB4}, \infty)$.

As shown in Table 4, when the scheduled bandwidth $N_{RB}$ of the data is in the range $(0, N_{RB0})$, the frequency density of the PTRS corresponding to the data is 0, indicating that there is no PTRS in the bandwidth. When the scheduled bandwidth $N_{RB}$ of the data is in the range $[N_{RB0}, N_{RB1})$, there are two PTRS blocks corresponding to the data, and a quantity of PTRSs in each PTRS block is 2 (that is, each PTRS block includes REs of two PTRSs). When the scheduled bandwidth $N_{RB}$ of the data is in the range $[N_{RB1}, N_{RB2})$, there are two PTRS blocks corresponding to the data, and a quantity of PTRSs in each PTRS block is 4 (that is, each PTRS block includes REs of four PTRSs). When the scheduled bandwidth $N_{RB}$ of the data is in the range $[N_{RB2}, N_{RB3})$, there are four PTRS blocks corresponding to the data, and a quantity of PTRSs in each PTRS block is 2 (that is, each PTRS block includes REs of two PTRSs). When the scheduled bandwidth $N_{RB}$ of the data is in the range $[N_{RB3}, N_{RB4})$, there are four PTRS blocks corresponding to the data, and a quantity of PTRSs in each PTRS block is 4 (that is, each PTRS block includes REs of four PTRSs). When the scheduled bandwidth $N_{RB}$ of the data is in the range $[N_{RB4}, \infty)$, there are eight PTRS blocks corresponding to the data, and a quantity of PTRSs in each PTRS block is 4 (that is, each PTRS block includes REs of four PTRSs, where an RE of one PTRS may be one PTRS).

Table 4

| Scheduled bandwidth of data | Quantity of PTRS blocks | Quantity of PTRSs in a PTRS block |
|---|---|---|
| $0 < N_{RB} < N_{RB0}$ | 0 | 0 |
| $N_{RB0} \leq N_{RB} < N_{RB1}$ | 2 | 2 |
| $N_{RB1} \leq N_{RB} < N_{RB2}$ | 2 | 4 |
| $N_{RB2} \leq N_{RB} < N_{RB3}$ | 4 | 2 |
| $N_{RB3} \leq N_{RB} < N_{RB4}$ | 4 | 4 |
| $N_{RB4} \leq N_{RB} < \infty$ | 8 | 4 |

For a PTRS sequence of a DFT-s-OFDM signal, an example in which the sequence is a pseudo-random sequence modulated based on pi/2-binary phase shift keying (binary phase shift keying, BPSK) is used, and the sequence may meet the following relationship (2) in time domain:

$$r(m') = w(k') \frac{e^{j\frac{\pi}{2}(m \bmod 2)}}{\sqrt{2}} \left[\left(1 - 2c(m')\right) + j\left(1 - 2c(m')\right)\right] \qquad (2)$$

$$m' = N_{samp}^{group} s' + k'$$

$$s' = 0, 1, \dots, N_{group}^{PTRS} - 1$$

$$k' = 0, 1, \dots, N_{samp}^{group} - 1$$

Herein, m' represents a time-domain position of the PTRS, s' represents a number of a PTRS block in a plurality of PTRS blocks, k' represents a frequency-domain position of the PTRS, pi represents $\pi$, $N_{samp}^{group}$ represents a quantity of PTRSs in each PTRS block, and $N_{group}^{PTRS}$ represents a quantity of PTRS blocks. $r(m')$ represents a pseudo-random sequence modulated based on pi/2-BPSK, w(k') is an orthogonal code of a $k'^{th}$ PTRS in a PTRS block, and $c(m')$ is an initial sequence of the sequence, where the initial sequence is usually a random sequence with values of 0 and 1.

A transmit-end device may insert the PTRS into the data based on the PTRS configuration to form a sending signal, and send the sending signal to a receive-end device.

After receiving a reception signal corresponding to the sending signal, the receive-end device demodulates the PTRS in the reception signal. Because the phase and amplitude of the PTRS are known, the receive-end device can estimate PHN of the PTRS, and then demodulate the data based on the PHN.

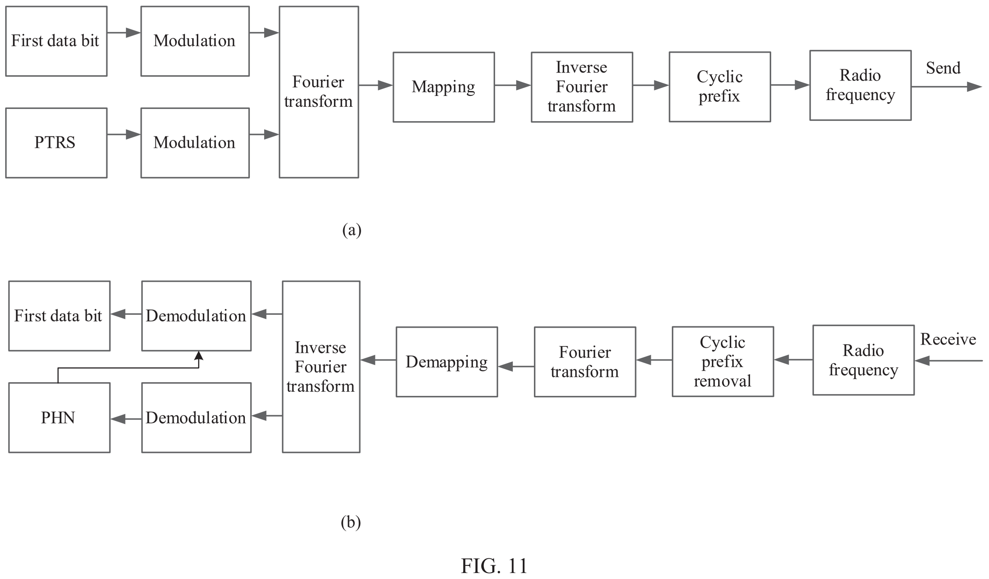

For example, a raw data bit transmitted by the transmit-end device to the receive-end device is a first data bit. A sending procedure in which the transmit-end device sends the first data bit may be shown in (a) in FIG. 11. The transmit-end device separately modulates the first data bit and a PTRS, and performs Fourier transform (for example, DFT or FFT) on the modulated first data bit and PTRS to obtain frequency-domain data. The frequency-domain data includes frequency-domain data corresponding to the first data and frequency-domain data corresponding to the PTRS (for ease of description, the frequency-domain data corresponding to the first data bit and the frequency-domain data corresponding to the PTRS are collectively referred to as first frequency-domain data below). The first frequency-domain data is mapped to a frequency-domain subcarrier, and then inverse Fourier transform (for example, IDFT or IFFT) is performed on the first frequency-domain data on the frequency-domain subcarrier, to obtain first time-domain data. Then, a cyclic prefix is added to obtain a second data bit (for example, DFT-s-OFDM). The second data bit is sent by using a radio frequency component.

A procedure in which the receive-end device receives the first data bit may be shown in (b) in FIG. 11. The receive-end device receives a third data bit by using a radio frequency component. The cyclic prefix of the third data bit is removed to obtain second time-domain data, where the second time-domain data is the first time-domain data with PHN. Fourier transform, demapping, and inverse Fourier transform are performed on the second time-domain data to obtain a fourth data bit corresponding to the first data and a fifth data bit corresponding to the PTRS. The fourth data bit is the first data bit with the PHN, and the fifth data bit is the PTRS with the PHN. For the receive-end device, the phase and amplitude of the PTRS are known. Therefore, the receive-end device may directly demodulate the fifth data bit to obtain the PTRS. Because the phase and amplitude of the first data bit are unknown, the receive-end device cannot obtain the first data bit by only demodulating the fourth data bit. Therefore, after obtaining the PTRS, the receive-end device may estimate the PHN based on the fifth data bit and the PTRS, and then demodulate the fourth data bit based on the PHN, to obtain the first data bit.

However, in the foregoing solution of estimating the PHN based on the PTRS, the PTRS is inserted into the first data bit, and the resource block carrying the PTRS is not used for data transmission. Therefore, compared with a solution in which the transmit-end device sends only the first data bit, this solution increases resource overheads.

To reduce resource overheads, a solution in which some data in the first data bit is transmitted by the resource block carrying the PTRS is provided. In this case, resource overheads for sending the first data bit with the PTRS inserted are the same as resource overheads for sending only the first data bit, and resource overheads can be reduced.

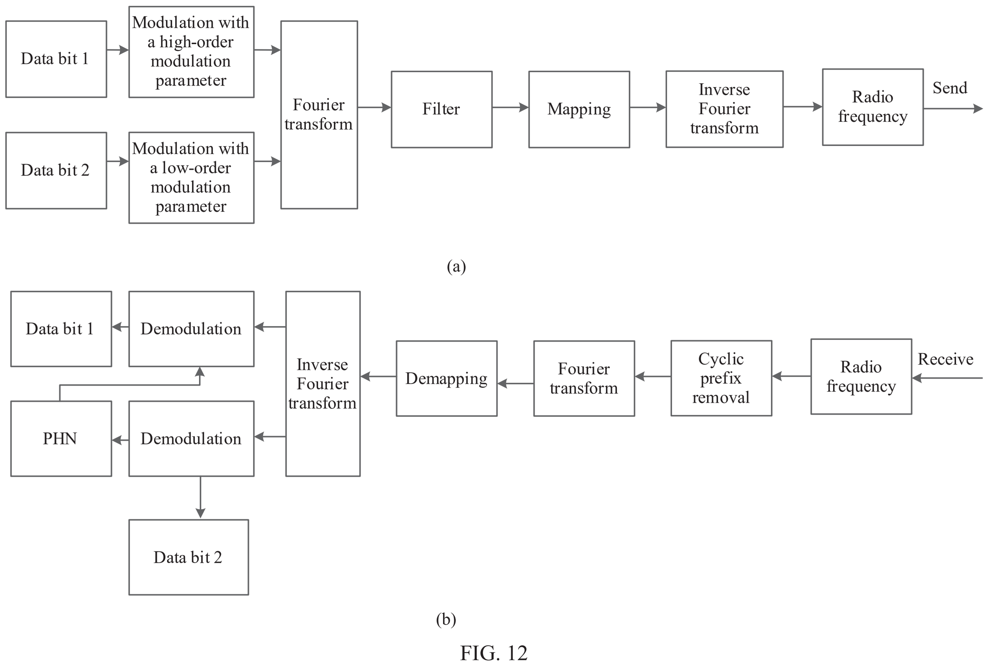

Specifically, as shown in FIG. 12, in (a) in FIG. 12, the first data bit includes a data bit 1 and a data bit 2. The data bit 2 is transmitted by the resource block carrying the PTRS. The transmit-end device modulates the data bit 1 by using a high-order modulation parameter, and modulates the data bit 2 by using a low-order modulation parameter. After modulation, the transmit-end device may perform Fourier transform, filtering, mapping, and inverse Fourier transform on the modulated first data bit to generate a sixth data bit, and send the sixth data bit by using a radio frequency component. A process in which the transmit-end device performs operations such as Fourier transform, filtering, mapping, and inverse Fourier transform on the modulated first data bit to generate the sixth data bit is similar to the process in which operations such as Fourier transform, filtering, mapping, and inverse Fourier transform are performed on the modulated first data bit and PTRS to generate the second data bit in (a) in FIG. 11. For details, refer to the related descriptions in (a) in FIG. 11. Details are not described herein again.

In (b) in FIG. 12, after receiving a seventh data bit, the receive-end device may obtain, in the manner of obtaining the fourth data bit and the fifth data bit based on the third data bit in (b) in FIG. 11, an eighth data bit corresponding to the data bit 1 and a ninth data bit corresponding to the data bit 2 based on the seventh data bit.

Because the data modulated by using the low-order modulation parameter is insensitive to the PHN, the receive-end device may directly estimate the data bit 2 based on the ninth data bit, and then estimate the PHN based on the ninth data bit and the data bit 2. Then, the eighth data bit is demodulated based on the PHN, to obtain the data bit 1.

However, during transmission in terahertz (terahertz, THz) bands, the PHN is large, and therefore data modulated by using the low-order modulation parameter cannot be insensitive to the PHN. In other words, in a THz band, the data modulated by using the low-order modulation parameter is also affected by the PHN. Therefore, the receive-end device cannot estimate the data bit 2 based on the ninth data bit, and then cannot obtain the PHN, so that the data bit 1 cannot be demodulated. In this case, in the THz band, the receive-end cannot demodulate either the data bit 1 or the data bit 2. Therefore, during THz data transmission, how to improve data demodulation performance is a problem to be urgently resolved.

Based on this, embodiments of this application provide a communication method. A receive-end device divides a plurality of received reception signals into two groups, and performs a joint operation on the two groups of signals, to obtain a constant value (namely, a first value), so that sending data separately corresponding to the plurality of reception signals can be determined based on the first value, avoiding impact of PHN on data demodulation performance, and improving data demodulation performance.

The technical solutions provided in this application may be applied to various communication systems. The communication system may be a fourth generation (4th generation, 4G) long term evolution (long term evolution, LTE) system, an advanced LTE (LTE-Advanced, LTE-A) system, a fifth generation (5th generation, 5G) mobile communication NR system, a vehicle-to-everything (vehicle to everything, V2X) system, an LTE-NR hybrid networking system, a device-to-device (device-to-device, D2D) system, a machine-to-machine (machine to machine, M2M) communication system, Internet of Things (Internet of Things, IoT), and another next-generation communication system, for example, a sixth generation (6th generation, 6G) communication system. Alternatively, the communication system may be a non-third generation partnership project (3rd Generation Partnership Project, 3GPP) communication system. This is not limited.

The foregoing communication systems to which this application is applicable are merely examples for description, and the communication systems to which this application is applicable are not limited thereto. Unified descriptions are provided herein, and details are not described below again.

The foregoing communication systems to which this application is applicable are merely examples for description, and the communication systems to which this application is applicable are not limited thereto. Unified descriptions are provided herein, and details are not described below again.

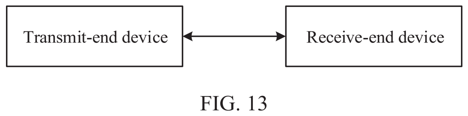

FIG. 13 shows a communication system to which embodiments of this application are applied. The communication system includes a transmit-end device and a receive-end device. The transmit-end device and the receive-end device can communicate with each other.

Optionally, the transmit-end device may be a terminal device, and correspondingly, the receive-end device may be a network device. Alternatively, the transmit-end device may be a network device, and correspondingly, the receive-end device may be a terminal device.

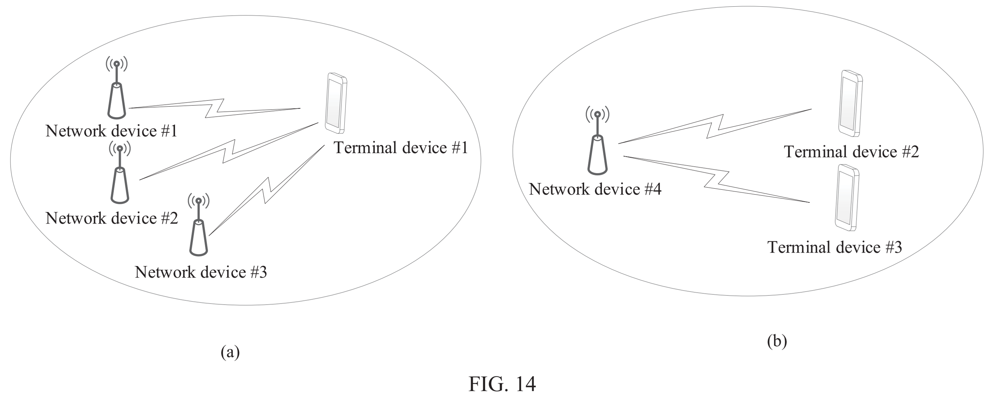

For example, the transmit-end device may include one terminal device, and the receive-end device includes at least one network device. As shown in (a) in FIG. 14, the communication system may include one terminal device (namely, a terminal device #1) and at least one network device (namely, a network device #1, a network device #2, and a network device #3). Alternatively, as shown in (b) in FIG. 14, the communication system may include one network device (namely, a network device #4) and at least one terminal device (namely, a terminal device #2 and a terminal device #3).

Optionally, in an embodiment of this application, a network device is a device that connects a terminal device to a wireless network. The network device may be a node in a radio access network (radio access network, RAN), and may be referred to as a base station or a radio access network node.

For example, the network device may include an evolved base station (NodeB or eNB or e-NodeB, evolutional NodeB) in an LTE system or an LTE-A system, for example, a conventional macro base station eNB and a micro base station eNB in a heterogeneous network scenario; or may include next generation NodeB (next generation NodeB, gNB) in an NR system; or may include a transmission reception point (transmission reception point, TRP), a home base station (for example, home evolved NodeB or home NodeB, HNB), a baseband unit (baseband unit, BBU), a baseband unit pool (BBU pool), a wireless fidelity (wireless fidelity, Wi-Fi) access point (access point, AP), and the like; or may include a base station in a non-terrestrial network (non-terrestrial network, NTN), that is, deployed on a high-altitude platform or a satellite. In the NTN, the network device may be used as a layer 1 (L1) relay (relay), or may be used as a base station, or may be used as a DU, or may be used as an integrated access and backhaul (integrated access and backhaul, IAB) node. Alternatively, the network device may be a device that implements functions of a base station in IoT, for example, a device that implements functions of a base station in V2X, D2D, or machine to machine (machine to machine, M2M). This is not limited in embodiments of this application.

Optionally, in an embodiment of this application, the base station may include various forms of base stations, such as a macro base station, a micro base station (also referred to as a small cell), a relay station, an access point, a home base station, a TRP, a transmitting point (transmitting point, TP), and a mobile switching center. This is not specifically limited in embodiments of this application.

Optionally, in an embodiment of this application, the terminal device may be a user-side device configured to implement a wireless communication function, for example, a terminal or a chip that may be used in a terminal. The terminal may be user equipment (user equipment, UE), an access terminal, a terminal unit, a terminal station, a mobile station, a mobile station, a remote station, a remote terminal, a mobile device, a wireless communication device, a terminal agent, a terminal apparatus, or the like in a 5G network or a public land mobile network (public land mobile network, PLMN) that evolves from 5G. The access terminal may be a cellular phone, a cordless telephone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an on-board device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal with a communication function in IoT, such as a terminal in V2X (for example, an Internet of Vehicles device), a terminal in D2D communication, or a terminal in M2M communication. The terminal may be mobile or fixed.

The following describes the communication method provided in embodiments of this application with reference to the accompanying drawings. It may be understood that, in embodiments of this application, the transmit-end device or the receive-end device may perform some or all of steps in embodiments of this application. These steps or operations are merely examples. Other operations or variants of various operations may be further performed in embodiments of this application. In addition, the steps may be performed in a sequence different from that presented in embodiments of this application, and not all the operations in embodiments of this application may be necessarily performed.

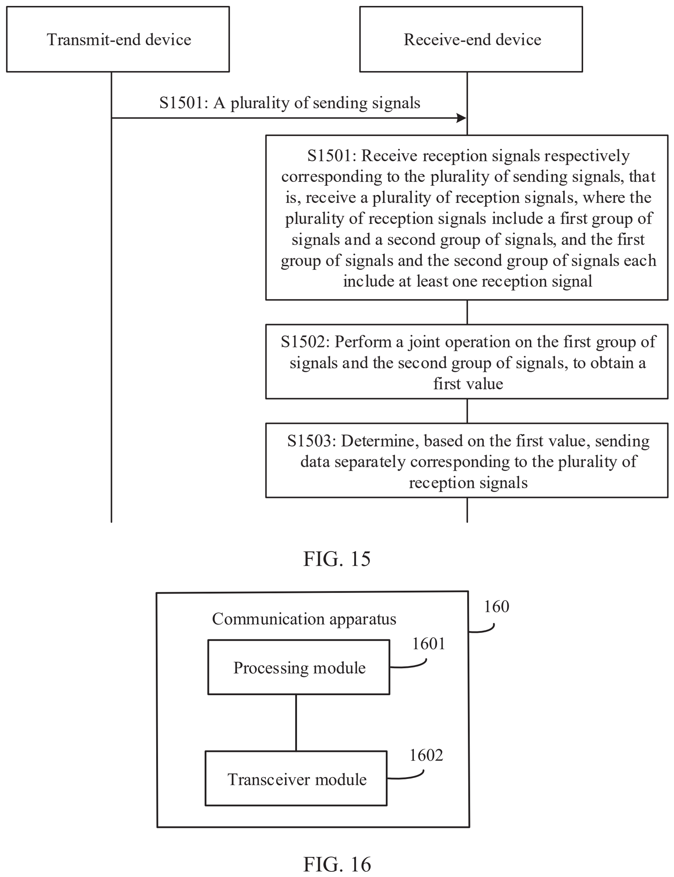

FIG. 15 shows a communication method according to an embodiment of this application. The communication method may include the following steps.

S1501: A transmit-end device sends a plurality of sending signals to a receive-end device. Correspondingly, the receive-end device receives reception signals respectively corresponding to the plurality of sending signals from the transmit-end device. In other words, the receive-end device receives a plurality of reception signals. For example, the plurality of sending signals are in a one-to-one correspondence with the plurality of reception signals. The plurality of reception signals include a first group of signals and a second group of signals, and the first group of signals and the second group of signals each include at least one reception signal.

For example, the reception signal may be understood as a sending signal affected by PHN and noise during transmission. For example, if a sending signal is a signal #1 and a corresponding reception signal is a signal #2, the signal #1 and the signal #2 meet the following relationship (3):

$$\text{signal \#2} = \text{signal \#1} * e^{j\theta_n} + noise \quad (3)$$

Herein, $\theta_n$ is a value of the PHN. For $n$, refer to the related descriptions in the foregoing relationship (1), and details are not described herein again. $noise$ is channel noise.

Optionally, the sending signal is for transmitting sending data. For example, the sending data and the sending signal are in a one-to-one correspondence, that is, one sending signal is for transmitting one piece of sending data. For example, if sending data #1 is 1 + j, a sending signal #1 may be for transmitting the sending data #1, that is, the sending signal #1 is for transmitting 1 + j. In this case, the sending data #1 corresponds to one sending signal.

Alternatively, one piece of sending data corresponds to two sending signals, that is, two sending signals are for transmitting one piece of sending data. One of the two sending signals is for transmitting a real part of the sending data, and the other sending signal is for transmitting an imaginary part of the sending data. For example, if sending data #1 is 1 + j, a sending signal #1 may be for transmitting a real part of the sending data #1, that is, the sending signal #1 is for transmitting 1; and a sending signal #2 may be for transmitting an imaginary part of the sending data #1, that is, the sending signal #2 is for transmitting j. In this case, the sending data #1 corresponds to the two sending signals.

Optionally, the sending signal may be a single-carrier signal, and correspondingly, the reception signal corresponding to the sending signal is also a single-carrier signal. For example, the single-carrier signal may include any one of an SC-OQAM signal, an SC-QAM signal, and a DFT-s-OFDM signal.

For example, when the single-carrier signal is an SC-OQAM signal, one sending signal is for transmitting one piece of sending data. When the single-carrier signal is an SC-QAM signal or a DFT-s-OFDM signal, two sending signals are for transmitting one piece of sending data.

Optionally, a plurality of sending signals may be located in a same RB, that is, a plurality of reception signals are located in a same RB. Alternatively, a plurality of sending signals may be located in adjacent RBs, that is, a plurality of reception signals are located in adjacent RBs.

Optionally, a quantity of reception signals included in the first group of signals is equal to a quantity of reception signals included in the second group of signals. For example, reception signals included in a same group of signals are located in a same RB or adjacent RBs.

S1502: The receive-end device performs a joint operation on the first group of signals and the second group of signals, to obtain a first value.

Optionally, that the receive-end device performs the joint operation on the first group of signals and the second group of signals includes: combining the first group of signals and combining the second group of signals, to obtain a first combined signal corresponding to the first group of signals and a second combined signal corresponding to the second group of signals; and performing the joint operation on the first combined signal and the second combined signal, to obtain the first value.

Optionally, the receive-end device may combine the first group of signals and combine the second group of signals through at least one of multiplication, addition, subtraction, and division. In other words, the first combined signal is a result obtained by performing at least one of multiplication, addition, subtraction, and division on the first group of signals, and the second combined signal is a result obtained by performing at least one of multiplication, addition, subtraction, and division on the second group of signals.

For example, the plurality of reception signals are a signal #1, a signal #2, a signal #3, and a signal #4. The first group of signals may include the signal #1 and the signal #2, and the second group of signals may include the signal #3 and the signal #4. The receive-end device may perform multiplication on the signal #1 and the signal #2 to obtain the first combined signal; or may perform division on the signal #1 and the signal #2 to obtain the first combined signal; or may perform addition on the signal #1 and the signal #2 to obtain the first combined signal; or may perform subtraction on the signal #1 and the signal #2 to obtain the first combined signal. Similarly, the receive-end device may obtain the second combined signal in a manner same as the manner of obtaining the first combined signal. Details are not described herein again.

S1503: The receive-end device determines, based on the first value, sending data separately corresponding to the plurality of reception signals.

In an example, the sending data separately corresponding to the plurality of reception signals may be understood as that: in the plurality of reception signals, each reception signal corresponds to different sending data. Optionally, in this example, the reception signal may be a DFT-s-OFDM signal.

In another example, the sending data separately corresponding to the plurality of reception signals may be understood as that: in the plurality of reception signals, every two reception signals correspond to same sending data. Optionally, in this example, the reception signal may be an SC-OQAM signal or an SC-QAM signal.

Optionally, the receive-end device may determine, from a first correspondence based on the first value, the sending data separately corresponding to the plurality of reception signals. The first correspondence includes a correspondence between a value and a plurality of pieces of data.

For example, the first correspondence may be predefined in a protocol, or may be determined and notified by the transmit-end device to the receive-end device, or may be determined and notified by the receive-end device to the transmit-end device. For example, the transmit-end device and the receive-end device are respectively a terminal device and a network device. The first correspondence may be reported by the terminal device to the network device, or may be configured by the network device for the terminal device.

According to the communication method provided in embodiments of this application, because there is PHN in a reception signal and the receive-end device cannot estimate the PHN during demodulation, the receive-end device divides the plurality of received reception signals into two groups, performs the joint operation on the two groups of signals to obtain a constant value (namely, the first value) unrelated to the PHN, and then implements data demodulation based on the constant value. In other words, in embodiments of this application, the PHN does not need to be considered during data demodulation. Compared with a solution of data demodulation implemented by estimating the PHN, this solution can improve data demodulation performance, that is, improve data transmission performance.

The foregoing is an overall description of the communication method provided in embodiments of this application. The following describes step S1501 to step S1503 in detail.

For step S1501:

Optionally, a process in which the transmit-end device sends the plurality of sending signals to the receive-end device may be implemented based on the following two scenarios.

Scenario 1: The sending signal is a DFT-s-OFDM signal, and correspondingly, the reception signal is also a DFT-s-OFDM signal.

Optionally, that the transmit-end device sends the plurality of sending signals to the receive-end device includes that: the transmit-end device encodes a plurality of pieces of sending data to obtain the sending signals corresponding to the plurality of pieces of sending data; and sends, to the receive-end device, the sending signals corresponding to the plurality of pieces of sending data. The plurality of sending signals are in a one-to-one correspondence with the plurality of pieces of sending data. In other words, one sending signal is for transmitting one piece of sending data. In this case, the plurality of reception signals are also in a one-to-one correspondence with the plurality of pieces of sending data.

For example, the transmit-end device may encode the plurality of pieces of sending data according to the encoding procedure in (a) in FIG. 11 or in (a) in FIG. 12, to obtain the sending signals corresponding to the plurality of pieces of sending data. For details, refer to the related descriptions of (a) in FIG. 11 or (a) in FIG. 12. Details are not described herein again.

Optionally, in the scenario 1, a quantity of the plurality of reception signals may be even. For example, if the quantity of the plurality of reception signals is an even multiple of 2, a quantity of reception signals in the first group of signals and a quantity of reception signals in the second group of signals are both even; or if the quantity of the plurality of reception signals is an odd multiple of 2, a quantity of reception signals in the first group of signals and a quantity of reception signals in the second group of signals are both odd. For example, the quantity of the plurality of reception signals is 2. In this case, the first group of signals and the second group of signals each include one reception signal. The quantity of the plurality of reception signals is 4. In this case, the first group of signals and the second group of signals each include two reception signals.

Scenario 2: The reception signal is an SC-OQAM signal or an SC-QAM signal, and correspondingly, the reception signal is also a DFT-s-OFDM signal.

Optionally, that the transmit-end device sends the plurality of sending signals to the receive-end device includes that: the transmit-end device separates imaginary parts and real parts of a plurality of pieces of sending data, to obtain a plurality of pieces of separated data, where two pieces of separated data correspond to one piece of sending data; encodes the plurality of pieces of separated data, to obtain the sending signals respectively corresponding to the plurality of pieces of separated data; and sends, to the receive-end device, the sending signals respectively corresponding to the plurality of pieces of separated data. In the plurality of pieces of sending signals, two sending signals correspond to one piece of sending data. In addition, one of the two sending signals is a reception signal corresponding to a real part of the sending data, that is, the one sending signal is for transmitting the real part of the sending data; and the other sending signal is a reception signal corresponding to an imaginary part of the sending data, that is, the other sending signal is for transmitting the imaginary part of the sending data.

For example, the transmit-end device may separate the imaginary parts and the real parts of the plurality of pieces of sending data according to the separation step shown in FIG. 7, to obtain the plurality of pieces of separated data, and encode the plurality of pieces of separated data according to the encoding procedure shown in (a) in FIG. 11 or in (a) in FIG. 12, to obtain the sending signals respectively corresponding to the plurality of pieces of separated data. For details, refer to the related descriptions of FIG. 7 and (a) in FIG. 11 or (a) in FIG. 12. Details are not described herein again.

Optionally, in the scenario 2, for same sending data, a reception signal corresponding to a real part and a reception signal corresponding to an imaginary part are located in a same group of signals.

For example, a quantity of the plurality of reception signals is 4 (the plurality of reception signals include a first reception signal, a second reception signal, a third reception signal, and a fourth reception signal), the first reception signal is a reception signal corresponding to a real part of first sending data, the second reception signal is a reception signal corresponding to an imaginary part of the first sending data, the third reception signal is a reception signal corresponding to a real part of second sending data, and the fourth reception signal is a reception signal corresponding to an imaginary part of the second sending data. The first group of signals may include the first reception signal and the second reception signal; and correspondingly, the second group of signals may include the third reception signal and the fourth reception signal. Alternatively, the first group of signals may include the third reception signal and the fourth reception signal; and correspondingly, the second group of signals may include the first reception signal and the second reception signal.

Optionally, in the scenario 2, a quantity of the plurality of reception signals may be an even multiple of 2, or may be an integer multiple of 4.

For example, a quantity of reception signals in the first group of signals and a quantity of reception signals in the second group of signals are both even. For example, the quantity of the plurality of reception signals is 4. In this case, the first group of signals and the second group of signals each include two reception signals. The quantity of the plurality of reception signals is 8. In this case, the first group of signals and the second group of signals each include four reception signals.

For ease of description, in the following, the sending signal in step S1501 to step S1503 is referred to as a second sending signal, and correspondingly, the reception signal in step S1501 to step S1503 is referred to as a reception signal corresponding to the second sending signal.

Optionally, before step S1502, the method further includes that: the transmit-end device sends a plurality of first sending signals to the receive-end device. Correspondingly, the receive end receives reception signals respectively corresponding to the plurality of first sending signals from the transmit-end device.

Data corresponding to the plurality of first sending signals is one part of raw data (which may also be referred to as raw data bits) of the transmit-end device, and data corresponding to the plurality of second sending signals (that is, a plurality of pieces of sending data) is the other part of the raw data.

For example, the transmit-end device may simultaneously send the first sending signal and the second sending signal; or the transmit-end device may first send the first sending signal and then send the second sending signal; or the transmit-end device may first send the second sending signal and then send the first sending signal. This is not limited.

Optionally, a resource unit for carrying the second sending signal and a resource unit for carrying the first sending signal are allocated from a same frequency-domain resource.

For example, the resource unit for carrying the first sending signal and the resource unit for carrying the second signal are allocated from the same frequency-domain resource, and the same frequency-domain resource is from a block of resources in frequency domain that are configured via same control signaling. For example, the control signaling may be downlink control information (downlink control information, DCI).

Alternatively, the resource unit for carrying the second sending signal and the resource unit for carrying the first sending signal belong to a same RB or a same scheduled bandwidth. The RB is a minimum scheduled bandwidth. The scheduled bandwidth may be a scheduled unit at another granularity. For example, the scheduled bandwidth includes a plurality of RBs. The scheduled bandwidth may indicate a quantity of resource blocks or a quantity of consecutive resource blocks occupied by a PDSCH scheduled by the DCI.

That the resource unit for carrying the second sending signal and the resource unit for carrying the first sending signal belong to the same RB or the same scheduled bandwidth may be understood as that a subcarrier for carrying the second sending signal and a subcarrier for carrying the first sending signal belong to the same RB or the same scheduled bandwidth. Data transmitted by the first sending signal may be mapped, by using a first modulation scheme, to a subcarrier for carrying a data signal, and data transmitted by the second sending signal may be mapped, by using a second modulation scheme, to a subcarrier for carrying a sending signal. For example, the first modulation scheme and the second modulation scheme may be the same or different. This is not limited.

Optionally, a modulation and coding parameter of the second sending signal is less than a modulation and coding parameter of the first sending signal. The modulation and coding parameter includes one or more of the following: an MCS index, a modulation order, a coding rate, or spectral efficiency.

For example, if the modulation and coding order includes an MCS order, a modulation order, a coding rate, and spectral efficiency, the MCS index of the second sending signal may be less than the MCS index of the first sending signal, the modulation order of the second sending signal may be less than the modulation order of the first sending signal, the coding rate of the second sending signal may be less than the coding rate of the first sending signal, and the spectral efficiency of the second sending signal may be less than the spectral efficiency of the first sending signal.

If the modulation and coding parameter includes an MCS index, a modulation order, and spectral efficiency, the MCS index of the second sending signal may be less than the MCS index of the first sending signal, the modulation order of the second sending signal may be less than the modulation order of the first sending signal, and the spectral efficiency of the second sending signal may be less than the spectral efficiency of the first sending signal. However, the coding rate of the second sending signal may be greater than or equal to the coding rate of the first sending signal, or the coding rate of the second sending signal may be less than the coding rate of the first sending signal.

It may be understood that, for a signal, a smaller modulation and coding parameter of the signal indicates a lower signal-to-noise ratio required for demodulating the signal at a receive end. The modulation and coding parameter of the second sending signal being less than the modulation and coding parameter of the first sending signal leads to a low signal-to-noise ratio required for demodulating the second sending signal, so that a success rate for the receive-end device to demodulate the reception signal corresponding to the second sending signal is high, thereby improving data demodulation performance.

Optionally, the modulation scheme of the second sending signal may include but is not limited to the following modulation schemes: BPSK, pi/2-BPSK, QPSK, pi/4QPSK, 8PSK, and 16QAM. Correspondingly, the modulation order of the second sending signal may be a modulation order corresponding to the foregoing modulation scheme.

Optionally, the coding rate of the second sending signal may be 1, that is, the raw data bit is transmitted without encoding. Optionally, the coding rate of the second sending signal may be greater than a first threshold, that is, a reference signal is transmitted at a high coding rate. For example, the first threshold may be 0.5.

For example, in an embodiment of this application, the coding rates of the second sending signal and the first sending signal may be values shown in Table 1, or may be values in another table (for example, a new MCS table). For example, a coding rate in the new MCS table may include but is not limited to one or more of the following values: 517, 553, 526, 602, 553, 616, 658, 682.5, 711, 754, 797, 841, 885, 916.5, 567, 616, 666, 719, 772, 822, 873, 910, 948, and 1.

Optionally, the modulation and coding parameter of the second sending signal and the modulation and coding parameter of the first sending signal may include the following two possible implementations.

In an example, the modulation and coding parameter of the second sending signal and the modulation and coding parameter of the first sending signal are in a one-to-one correspondence. Therefore, after determining the modulation and coding parameter of the first sending signal, the transmit-end device may determine the modulation and coding parameter of the second sending signal based on the correspondence between the modulation and coding parameter of the second sending signal and the modulation and coding parameter of the first sending signal.

In another example, the modulation and coding parameter of the second sending signal and the modulation and coding parameter of the first sending signal are in a many-to-one correspondence. For example, the modulation and coding parameter includes an MCS index. The correspondence between the modulation and coding parameter of the second sending signal and the modulation and coding parameter of the first sending signal may include the content shown in the following Table 5 (that is, Table 5A or Table 5B):

Table 5A

| MCS index (MCS1) of the first sending signal | MCS index (MCS2) of the second sending signal |
|---|---|
| MCS1 < MCS11 | The sending signal does not transmit data |
| MCS11 ≤ MCS1 < MCS12 | MCS2 ≤ MCS21 |
| MCS12 ≤ MCS1 < MCS13 | MCS2 ≤ MCS22 |
| ... | ... |
| MCS1(n - 1) ≤ MCS1 < MCS1n | MCS2 ≤ MCS2(n - 1) |
| MCS1n ≤ MCS1 | MCS2 ≤ MCS2n |

In Table 5A, when the MCS index (namely, MCS1) of the first sending signal is greater than or equal to MCS 11, the MCS index of the first sending signal may correspond to MCS indexes (namely, MCS2) of a plurality of second sending signals. For example, when MCS11 ≤ MCS1 < MCS12, a value range of MCS2 corresponding to MCS1 is MCS2 ≤ MCS21. $n$ is a positive integer.

It may be understood that, in Table 5A, that the second sending signal does not transmit data means that the second sending signal does not carry raw data. For example, the second sending signal carries a reference signal. For example, the reference signal may be a PTRS.

Table 5B

| MCS index (MCS2) of the second sending signal | MCS index (MCS1) of the first sending signal |
|---|---|
| MCS2 < MCS11 | MCS1 ≤ MCS21 |
| MCS11 ≤ MCS2 < MCS12 | MCS22 ≤ MCS1 |
| MCS12 ≤ MCS2 < MCS13 | MCS23 ≤ MCS1 |
| ... | ... |
| MCS1(n - 1) ≤ MCS2 < MCS1n | MCS2(n - 1) ≤ MCS1 |
| MCS1n ≤ MCS2 | MCS2n ≤ MCS1 |

Parameters in Table 5B are the same as those in Table 5A. For details, refer to the related descriptions in Table 5A. Details are not described herein again.

It should be noted that an example in which the modulation and coding parameter includes an MCS index is used in Table 5. The MCS index in Table 5 may also be replaced with a coding rate, a modulation order (or a modulation scheme), or spectral efficiency. For example, the MCS index in Table 5A is replaced with a modulation scheme. When a modulation scheme used for a data signal is 16QAM, a modulation scheme that may be used for a sending signal is QPSK. When a modulation scheme used for a data signal is 64QAM, a modulation scheme that may be used for a sending signal is 16QAM or 8PSK.

Optionally, the modulation and coding parameter of the second sending signal may be indicated by a network device. To be specific, the network device may indicate the modulation and coding parameter of the second sending signal from the plurality of modulation and coding parameters in Table 5A or Table 5B.

Optionally, the correspondence between the modulation and coding parameter of the second sending signal and the modulation and coding parameter of the first sending signal may be configured and notified by the network device to a terminal device, or may be reported by a terminal device to the network device, or may be predefined in a protocol.

For example, the correspondence between the modulation and coding parameter of the second sending signal and the modulation and coding parameter of the first sending signal is configured and notified by the network device to the terminal device. The network device may indicate the correspondence between the modulation and coding parameter and the modulation and coding parameter of the first sending signal (that is, the correspondence between MCS1 and MCS2) to the terminal device via radio resource control (radio resource control, RRC) signaling and MAC control element (MAC control element, MAC-CE) signaling, and then indicate the modulation and coding parameter of the second sending signal from the correspondence by using DCI.

In a possible implementation, the second sending signal may exist as an independent transport block. In other words, another signal carried in a resource block for carrying the second sending signal is transmitted by using a transport block different from that of the second sending signal. This avoids interference from another signal to the sending signal.

Optionally, in this possible implementation, a field may be added to schedule the transport block that carries the

18

second sending signal. For example, if the sending signal is scheduled by using DCI, a modulation and coding scheme field may be added to the DCI, and the modulation and coding scheme field indicates a scheduling parameter of the transport block that carries the second sending signal. Further, at least one of a new data indication field (new data indicator) or a redundancy version field (redundancy version) may be added to the DCI. The new data indication field is an access condition field of activation signaling, and the redundancy version field is a verification field of activation signaling.

In another possible implementation, the second sending signal and another signal that are in a resource block for carrying the second sending signal are located in a same transport block. This saves transport block resources.

For example, that the second sending signal and another signal that are in the resource block for carrying the second sending signal are located in the same transport block may be understood as that: a subcarrier occupied by the second sending signal and a subcarrier occupied by another signal in the resource block are located in the same transport block, or a resource element occupied by the second sending signal and a resource element occupied by another signal in the resource block are located in the same transport block.

Optionally, in this example, a scheduling parameter for scheduling the second sending signal may be completely or partially different from a scheduling parameter for scheduling another signal. For example, the scheduling parameter includes a modulation and coding parameter, and the modulation and coding parameter in the scheduling parameter for scheduling the second sending signal is different from the modulation and coding parameter in the scheduling parameter for scheduling another signal.

Optionally, the first sending signal may be scheduled by a control channel, and the second sending signal may be scheduled by a control channel or a data channel. For example, the sending signal may be scheduled via DCI or MAC-CE signaling, and the MAC-CE signaling is transmitted by a physical downlink shared channel (physical downlink shared channel, PDSCH). Optionally, the second sending signal and the first sending signal may be scheduled by using same DCI. Optionally, a range of the modulation and coding parameter of the second sending signal may be configured via RRC signaling; or a range of the modulation and coding parameter of the second sending signal may be configured via MAC-CE signaling; or a range of the modulation and coding parameter of the second sending signal may be agreed on in a protocol.

Optionally, the modulation and coding parameter of the second sending signal may be determined based on one or more of the following parameters: a quantity of resource units occupied by data transmitted by the first sending signal, a frequency-domain density of the second sending signal, a time-domain density of the second sending signal, power of the second sending signal, a quantity of resource blocks for carrying the second sending signal, a quantity of second sending signals carried in a resource block for carrying the second sending signal, a modulation and coding parameter of the first sending signal, and power of the first sending signal.

For example, the quantity of resource units occupied by the data transmitted by the first sending signal may be represented as a bandwidth in frequency domain, and may be represented as a length of duration in time domain.

For example, the modulation and coding parameter includes a coding rate. The quantity of resource blocks for carrying the second sending signal may be determined based on the quantity of resource units occupied by the data transmitted by the first sending signal and the frequency-domain density of the second sending signal, and then the coding rate of the second sending signal may be determined based on the quantity of resource blocks for carrying the second sending signal.

For example, a bandwidth of the data transmitted by the first sending signal is 60 RBs, where there is an RE of one second sending signal on every two RBs (that is, a frequency-domain density of the second sending signal is 2), duration of a transport block of a PDSCH that carries the data transmitted by the first sending signal is an entire slot, and one slot includes 14 OFDM symbols. In this case, a quantity of REs of the second sending signal of the PDSCH in the entire slot is $60/2*14 = 420$ RE. If the second sending signal transmits 100 bits of data, and a modulation scheme of the second sending signal is QPSK (that is, one RE can transmit 2 bits of information), a coding rate of the second sending signal is $100/(420*2) = 0.119$.

Alternatively, a bandwidth of the data transmitted by the first sending signal is 60 RBs, where there is an RE of one second sending signal on every two RBs (that is, a frequency-domain density of the second sending signal is 2), and duration of a transport block of a PDSCH that carries the data transmitted by the first sending signal is 11 OFDM symbols. In this case, a quantity of REs of the second sending signal of the PDSCH in the entire slot is $60/2*11 = 330$ RE. If the second sending signal transmits 100 bits of data, and a modulation scheme of the second sending signal is QPSK, a coding rate of the second sending signal is $100/(330*2) = 0.152$.

Optionally, if a modulation parameter of the second sending signal is determined when power of the first sending signal is the same as power of the second sending signal, the modulation and coding parameter of the second sending signal may be increased when the power of the second sending signal increases. For example, if the power of the second sending signal increases by a factor of M, the modulation and coding parameter of the second sending signal may be increased by K. M and K are both positive integers.

For example, if the modulation and coding parameter includes an MCS index, M = 2, and K = 3, when the power of the second sending signal increases by a factor of 2, the MCS index of the second sending signal may be increased by 3 levels. One MCS index may be understood as one level. Alternatively, in Table 5, MCS11, MCS12, MCS13, ..., and MCS1n each are one level, and MCS11 is one level lower than MCS12. Values of M and K may be configured via RRC signaling (or MAC-CE signaling), or may be agreed on in a protocol. This is not limited in embodiments of this application.

Optionally, when a quantity of second sending signals is less than a second threshold, or a volume of data transmitted by the second sending signal is less than a third threshold, the data transmitted by the second sending signal may be transmitted by using a sequence, that is, the data transmitted by the second sending signal is not encoded. Each second sending signal sequence may indicate one piece of data transmitted by the second sending signal.

Optionally, when a quantity of second sending signals is greater than or equal to the second threshold, or a volume of data transmitted by the second sending signal is greater than or equal to the third threshold, the data transmitted by the second sending signal may be transmitted at a high coding rate. In this case, the volume of the data transmitted by the second sending signal is large, and the data is transmitted at a high coding rate, leading to a high encoding gain.

Based on the foregoing optional solution, the transmit-end device divides raw data into two parts. One part is transmitted by the first sending signal, and the other part is transmitted by the second sending signal. Compared with a solution of transmitting raw data with a PTRS inserted, this solution reduces resource units that are not used for data transmission in a bandwidth, thereby improving spectral efficiency.

For step S1502:

For example, the first value may be implemented based on the following two scenarios.

Scenario 1: The sending signal is a DFT-s-OFDM signal, and correspondingly, the reception signal is also a DFT-s-OFDM signal.

For example, in the scenario 1, the first value may include the following two possible implementations.

In a possible implementation, the receive-end device may perform multiplication on the second group of signals and a conjugate value of the first group of signals, to obtain the first value. In other words, the joint operation includes multiplication on the second group of signals and the conjugate value of the first group of signals.

In a first example, the first group of signals and the second group of signals each include one reception signal, that is, a quantity of the plurality of reception signals is 2.

For example, the two reception signals are $r_1$ and $r_2$, where $r_1 = s_1 * e^{j\theta_n} + noise_1$, $r_2 = s_2 * e^{j\theta_n} + noise_2$, $s_1$ is a sending signal corresponding to $r_1$, and $s_2$ is a sending signal corresponding to $r_2$. In this case, if the first group of signals includes $r_1$ and the second group of signals includes $r_2$, the first group of signals, the second group of signals, and the first value may meet the following relationship (4):

$$\mathrm{conj}(r_1) * r_2 = conj(s_1) * e^{-j\theta_n} * s_2 * e^{j\theta_n} + noise = conj(s_1) * s_2 + noise = C_1 + noise \quad (4)$$

In the foregoing formula, $C_1$ is the first value. Because both $s_1$ and $s_2$ are constants, a result $C_1$ of $conj(s_1) * s_2$ is also a constant. $noise$ is related to at least one of $noise_1$ or $noise_2$.

If the first group of signals includes $r_2$ and the second group of signals includes $r_1$, the first group of signals, the second group of signals, and the first value may meet the following relationship (5):

$$r_1 * \mathrm{conj}(r_2) = s_1 * e^{j\theta_n} * conj(s_2) * e^{-j\theta_n} + noise = s_1 * conj(s_2) + noise = C_2 + noise \quad (5)$$

In the foregoing formula, $C_2$ is the first value. Because both $s_1$ and $s_2$ are constants, a result $C_2$ of $s_1 * conj(s_2)$ is also a constant. $noise$ is related to at least one of $noise_1$ or $noise_2$.

In a second example, the first group of signals and the second group of signals each include at least two reception signals, that is, a quantity of the plurality of reception signals is greater than or equal to 4.

For example, the quantity of the plurality of reception signals is 4, and the four reception signals are $r_1, r_2, r_3$, and $r_4$, where $r_1 = s_1 * e^{j\theta_n} + noise_1$, $r_2 = s_2 * e^{j\theta_n} + noise_2$, $r_3 = s_3 * e^{j\theta_n} + noise_3$, $r_4 = s_4 * e^{j\theta_n} + noise_4$, $s_1$ is a sending signal corresponding to $r_1$, $s_2$ is a sending signal corresponding to $r_2$, $s_3$ is a sending signal corresponding to $r_3$, and $s_4$ is a sending signal corresponding to $r_4$. In this case, if the first group of signals includes $r_1$ and $r_2$, and the second group of signals includes $r_3$ and $r_4$, the first group of signals, the second group of signals, and the first value may meet the following relationship (6):

$$\mathrm{conj}(r_1 + r_2) * (r_3 + r_4) = conj(s_1 + s_2) * e^{-j\theta_n} * (s_3 + s_4) * e^{j\theta_n} + noise$$
$$= conj(s_1 + s_2) * (s_3 + s_4) + noise = C_3 + noise \quad (6)$$

In the foregoing formula, $C_3$ is the first value. Because $s_1, s_2, s_3$, and $s_4$ are all constants, a result $C_3$ of $conj(s_1 + s_2) * (s_3 + s_4)$ is also a constant. $noise$ is related to at least one of $noise_1, noise_2, noise_3$, and $noise_4$.

If the first group of signals includes $r_3$ and $r_4$, and the second group of signals includes $r_1$ and $r_2$, the first group of signals, the second group of signals, and the first value may meet the following relationship (7):

$$\mathrm{conj}(r_3 + r_4) * (r_1 + r_2) = conj(s_3 + s_4) * e^{-j\theta_n} * (s_1 + s_2) * e^{j\theta_n} + noise$$

$$= conj(s_3 + s_4) * (s_1 + s_2) + noise = C_4 + noise \quad (7)$$

In the foregoing formula, $C_4$ is the first value. Because $s_1$, $s_2$, $s_3$, and $s_4$ are all constants, a result $C_4$ of $conj(s_3 + s_4) * (s_1 + s_2)$ is also a constant. *noise* is related to at least one of $noise_1$, $noise_2$, $noise_3$, and $noise_4$.

In the relationship (6) and the relationship (7), description is made by using an example: addition is performed on the reception signals included in the first group of signals to obtain a first combined signal, addition is performed on the reception signals included in the second group of signals to obtain a second combined signal, and then multiplication is performed on the second combined signal and a conjugate value of the first combined signal to obtain the first value. The first combined signal may alternatively be obtained by performing any one of subtraction, multiplication, and division on the reception signals included in the first group of signals. Correspondingly, the second combined signal is obtained by performing any one of subtraction, multiplication, and division on the reception signals included in the second group of signals. Then, the first value is obtained. For specific implementation, refer to the related descriptions of the relationship (6) or the relationship (7), and details are not described herein again.

In another possible implementation, the receive-end device may perform division on the first group of signals and the second group of signals, to obtain the first value. In other words, the joint operation includes division on the first group of signals and the second group of signals.

In a first example, the first group of signals and the second group of signals each include one reception signal, that is, a quantity of the plurality of reception signals is 2.

For example, the two reception signals are $r_1$ and $r_2$, where $r_1 = s_1 * e^{j\theta_n} + noise_1$, $r_2 = s_2 * e^{j\theta_n} + noise_2$, $s_1$ is a sending signal corresponding to $r_1$, and $s_2$ is a sending signal corresponding to $r_2$. In this case, if the first group of signals includes $r_1$ and the second group of signals includes $r_2$, the first group of signals, the second group of signals, and the first value may meet the following relationship (8):

$$r_1 \div r_2 = s_1 * e^{j\theta_n} \div s_2 * e^{j\theta_n} + noise = s_1 \div s_2 + noise = C_5 + noise \quad (8)$$

In the foregoing formula, $C_5$ is the first value. Because both $s_1$ and $s_2$ are constants, a result $C_5$ of $s_1 \div s_2$ is also a constant. *noise* is related to at least one of $noise_1$ or $noise_2$.

If the first group of signals includes $r_2$ and the second group of signals includes $r_1$, the first group of signals, the second group of signals, and the first value may meet the following relationship (9):

$$r_2 \div r_1 = s_2 * e^{j\theta_n} \div s_1 * e^{j\theta_n} + noise = s_2 \div s_1 + noise = C_6 + noise \quad (9)$$

In the foregoing formula, $C_6$ is the first value. Because both $s_1$ and $s_2$ are constants, a result $C_6$ of $s_2 \div s_1$ is also a constant. *noise* is related to at least one of $noise_1$ or $noise_2$.

In a second example, the first group of signals and the second group of signals each include at least two reception signals, that is, a quantity of the plurality of reception signals is greater than or equal to 4.

For example, the quantity of the plurality of reception signals is 4, and the four reception signals are $r_1$, $r_2$, $r_3$, and $r_4$, where $r_1 = s_1 * e^{j\theta_n} + noise_1$, $r_2 = s_2 * e^{j\theta_n} + noise_2$, $r_3 = s_3 * e^{j\theta_n} + noise_3$, $r_4 = s_4 * e^{j\theta_n} + noise_4$, $s_1$ is a sending signal corresponding to $r_1$, $s_2$ is a sending signal corresponding to $r_2$, $s_3$ is a sending signal corresponding to $r_3$, and $s_4$ is a sending signal corresponding to $r_4$. In this case, if the first group of signals includes $r_1$ and $r_2$, and the second group of signals includes $r_3$ and $r_4$, the first group of signals, the second group of signals, and the first value may meet the following relationship (10):

$$(r_1 + r_2) \div (r_3 + r_4) = \left[(s_1 + s_2) * e^{j\theta_n}\right] \div \left[(s_3 + s_4) * e^{j\theta_n}\right] + noise$$

$$= (s_1 + s_2) \div (s_3 + s_4) + noise = C_7 + noise \quad (10)$$

In the foregoing formula, $C_7$ is the first value. Because both $s_1$ and $s_2$ are constants, a result $C_7$ of $(s_1 + s_2) \div (s_3 + s_4)$ is also a constant. *noise* is related to at least one of $noise_1$, $noise_2$, $noise_3$, and $noise_4$.

If the first group of signals includes $r_3$ and $r_4$, and the second group of signals includes $r_1$ and $r_2$, the first group of signals, the second group of signals, and the first value may meet the following relationship (11):

$$(r_3 + r_4) \div (r_1 + r_2) = \left[(s_3 + s_4) * e^{j\theta_n}\right] \div \left[(s_1 + s_2) * e^{j\theta_n}\right] + noise$$

$$= (s_3 + s_4) \div (s_1 + s_2) + noise = C_8 + noise(11)$$

In the foregoing formula, $C_8$ is the first value. Because $s_1$, $s_2$, $s_3$, and $s_4$ are all constants, a result $C_8$ of $(s_3 + s_4) \div (s_1 + s_2)$ is also a constant. *noise* is related to at least one of *noise$_1$*, *noise$_2$*, *noise$_3$*, and *noise$_4$*.

In the relationship (10) and the relationship (11), description is made by using an example: addition is performed on the reception signals included in the first group of signals to obtain a first combined signal, addition is performed on the reception signals included in the second group of signals to obtain a second combined signal, and then multiplication is performed on the second combined signal and a conjugate value of the first combined signal to obtain the first value. The first combined signal may alternatively be obtained by performing any one of subtraction, multiplication, and division on the reception signals included in the first group of signals. Correspondingly, the second combined signal is obtained by performing any one of subtraction, multiplication, and division on the reception signals included in the second group of signals. Then, the first value is obtained. For specific implementation, refer to the related descriptions of the relationship (10) or the relationship (11), and details are not described herein again.

Scenario 2: The reception signal is an SC-OQAM signal or an SC-QAM signal, and correspondingly, the reception signal is also a DFT-s-OFDM signal.

Optionally, in the scenario 2, that the receive-end device performs the joint operation on the first group of signals and the second group of signals to obtain the first value includes that: the receive-end device performs addition or subtraction on a reception signal corresponding to a real part and a reception signal corresponding to an imaginary part of same sending data in the reception signals of the first group of signals, to obtain a combined reception signal corresponding to the reception signals in the first group of signals; performs addition or subtraction on a reception signal corresponding to a real part and a reception signal corresponding to an imaginary part of same sending data in the reception signals of the second group of signals, to obtain a combined reception signal corresponding to the reception signals in the second group of signals; and performs the joint operation on the combined reception signal corresponding to the reception signals in the first group of signals and the combined reception signal corresponding to the reception signals in the second group of signals, to obtain the first value.

The following uses an example in which a combined reception signal corresponding to sending data is determined based on a reception signal corresponding to a real part of the sending data and a reception signal corresponding to an imaginary part of the sending data for description.

Optionally, the receive-end device may obtain, based on an encoding vector, a combined reception signal corresponding to sending data by using a reception signal corresponding to a real part of the sending data and a reception signal corresponding to an imaginary part of the sending data.

For example, two reception signals corresponding to sending data may be $y_1$ and $y_2$, where $y_1$ meets the following relationship (12), and $y_2$ meets the following relationship (13):

$$y_1 = (I + jQ_\alpha + jISI_1) * e^{j\theta_n} + noise_1 \quad (12)$$

$$y_2 = (jQ + I\alpha + ISI_2) * e^{j\theta_n} + noise_2 \quad (13)$$

In the relationship (12) and the relationship (13), $I$ is a real part of the sending data corresponding to $y_1$ and $y_2$, Q is an imaginary part of the sending data, $ISI_1$ is interference from other data than the sending data to the real part, $ISI_2$ is interference from other data than the sending data to the imaginary part, $jQ_\alpha$ is interference from neighboring data of the real part to the real part, $I\alpha$ is interference from neighboring data of the imaginary part to the imaginary part, and $\alpha$ is an interference coefficient or a filter coefficient.

If an encoding vector is $\begin{bmatrix} 1 \\ 1 \end{bmatrix}$, that is, all elements in the encoding vector are 1, a combined reception signal is obtained by performing addition on $y_1$ and $y_2$, that is, the combined reception signal $A$, $y_1$, and $y_2$ meet the following relationship (14):

$$A = y_1 + y_2 = \left[(I + I\alpha + ISI_2) + j(Q + Q_\alpha + ISI_1)\right] * e^{j\theta_n} + noise \ (14)$$

Let $I + I\alpha + ISI_2 = B_1$ and $Q + Q_\alpha + ISI_1 = B_2$, where $B_1$ and $B_2$ are specific values, and signs of $B_1$ and $B_2$ may be specified to be positive or negative. The transmit-end device may determine, based on the foregoing equivalent relationships of $B_1$ and $B_2$, values of the real part $I$ and the imaginary part Q of the sending data as follows:

$$I = (\pm B_1 - ISI_2)/(1 + \alpha) \quad (15)$$

$$Q = (\pm B_2 - ISI_1)/(1 + \alpha) \quad (16)$$

In this case, the relationship (14) may be converted into the following relationship (17):

$$A = y_1 + y_2 = [B_1 + jB_2] * e^{j\theta_n} + noise \quad (17)$$

It can be learned from the relationship (15) that $B_1$ is a real part of sending data corresponding to $A$, and $B_2$ is an imaginary part of the sending data corresponding to $A$. In other words, the sending data corresponding to $y_1$ and $y_2$ is $B_1 + jB_2$. In embodiments of this application, values of $B_1$ and $B_2$ may be the same or different. This is not limited.

If an encoding vector is $\begin{bmatrix} 1 \\ -1 \end{bmatrix}$, that is, the second element in the encoding vector is -1, a combined reception signal is obtained by performing subtraction on $y_1$ and $y_2$, that is, the combined reception signal $A$, $y_1$, and $y_2$ meet the following relationship (18):

$$A = y_1 - y_2 = [(I - I\alpha - ISI_2) + j(-Q + Q_\alpha + ISI_1)] * e^{j\theta_n} + noise \quad (18)$$

Let $I - I\alpha - ISI_2 = B_3$ and $-Q + Q_\alpha + ISI_1 = B_4$, where $B_3$ and $B_4$ are specific values, and signs of $B_3$ and $B_4$ may be specified to be positive or negative. Similarly, in this case, the relationship (18) may be converted into the following relationship (19):

$$A = y_1 + y_2 = [B_3 + jB_4] * e^{j\theta_n} + noise \quad (19)$$

For the parameters in the relationship (18) and the relationship (19), refer to the related descriptions of the parameters in the relationship (12) to the relationship (17), and details are not described herein again.

The foregoing uses an example in which the value of the element in the encoding vector is 1 or -1 to describe the implementation of the combined reception signal. The value of the element in the encoding vector may be any number other than 1 or -1. For example, the value of the element in the encoding vector may be 2, 3, -3, or the like. In this case, the implementation of the combined reception signal is similar to the implementation of the combined reception signal in the relationship (14) or the relationship (15). For details, refer to the related descriptions in the relationship (14) or the relationship (15). Details are not described herein again. In other words, the value of the element in the encoding vector is not limited in embodiments of this application. When the value of the element in the encoding vector is a positive number, addition is performed on the reception signals. When the value of the element in the encoding vector is a negative number, subtraction is performed on the reception signals.

Optionally, in the scenario 2, a process in which the receive-end device performs the joint operation on the combined reception signal corresponding to the reception signals in the first group of signals and the combined reception signal corresponding to the reception signals in the second group of signals to obtain the first value is similar to the process in which the first value is determined in the scenario 1. In other words, the receive-end device may consider the combined reception signal as the reception signal in the scenario 1, and then determine the first value according to the process in the scenario 1. For details, refer to the related descriptions in the scenario 1. Details are not described herein again.

For step S1503:
Optionally, the receive-end device may determine the first correspondence from a plurality of correspondences, and then determine, from the first correspondence, the sending data separately corresponding to the plurality of reception signals.

For example, each of the plurality of correspondences includes a correspondence between a value and a plurality of pieces of data. For example, a quantity of sending data corresponding to the plurality of reception signals is 2X, and each value in a correspondence corresponds to 2X pieces of data, where X is a positive integer.

Optionally, the plurality of correspondences are distinguished based on at least one of different modes of the joint operation, a value of X, and different grouping manners of 2X or 4X reception signals. Therefore, the receive-end device may determine the first correspondence from the plurality of correspondences based on at least one of the mode of the joint operation, the value of X, and the grouping manner of the 2X or 4X reception signals.

For example, based on different modes of the joint operation, the plurality of correspondences include two correspondences. The joint operation corresponding to one correspondence includes multiplication on the second signal and the conjugate value of the first group of signals, and the joint operation corresponding to the other correspondence includes division on the first group of signals and the second signal.

Based on the value of X, the plurality of correspondences include X correspondences, and each correspondence corresponds to one value of X.

Based on different grouping manners of 2X reception signals, the plurality of correspondences include two correspondences. The grouping manner corresponding to one correspondence is as follows: the first group includes the first half of 2X or 4X reception signals (for example, the first X reception signals or the first 2X reception signals), and the second group includes the second half of 2X or 4X reception signals (for example, the last X reception signals or the last 2X reception signals). The grouping manner corresponding to the other correspondence is as follows: the second group includes the first half of 2X or 4X reception signals (for example, the first X reception signals or the first 2X reception signals), and the first group includes the second half of 2X or 4X reception signals (for example, the last X reception signals or the last 2X reception signals).

For ease of description, the following uses an example in which the first correspondence is determined from the plurality of correspondences when the value of X is 2 and the joint operation includes multiplication on the second signal and the conjugate value of the first group of signals for description. In this case, if the reception signal is a DFT-s-OFDM signal, the first group of signals and the second group of signals each include one reception signal; or if the reception signal is an SC-OQAM signal or an SC-QAM signal, the first group of signals and the second group of signals each include two reception signals.

In an example, the first correspondence may be represented by a table.

For example, when the first group of signals includes a reception signal corresponding to sending data #1, and the second group of signals includes a reception signal corresponding to sending data #2, the first value is determined according to the relationship (4). The first correspondence may include the content in the following Table 6A or Table 6B:

Table 6A

| Value | Sending data #1 | Sending data #2 |
|---|---|---|
| 2j | 1 - j | 1 + j |
| -2j | 1 + j | 1 - j |
| 2 | 1 - j | 1 - j |
| -2 | 1 + j | -1 - j |
| ... | ... | ... |

Table 6B

| Value | Sending data #1 | Sending data #2 |
|---|---|---|
| 2j | -1 + j | -1 - j |
| -2j | -1 - j | -1 + j |
| 2 | -1 + j | -1 + j |
| -2 | -1 - j | 1 + j |
| ... | ... | ... |

In Table 6A and Table 6B, the two pieces of sending data corresponding to a case in which the values of $C_1$ are 2j, -2j, 2, and -2 are used as an example for description. Alternatively, $C_1$ may be another value other than the values of $C_1$ shown in Table 6 (that is, Table 6A or Table 6B). Correspondingly, the two pieces of sending data corresponding to $C_1$ may alternatively be other values than the values of the two pieces of sending data shown in Table 6 (that is, Table 6A or Table 6B). This is not limited.

For example, when the first group of signals includes a reception signal corresponding to sending data #2, and the second group of signals includes a reception signal corresponding to sending data #1, the first value is determined according to the relationship (5). The first correspondence may include the content in the following Table 6A or Table 6B:

Table 7A

| Value | Sending data #1 | Sending data #2 |
|---|---|---|
| 2j | 1 + j | 1 - j |

(continued)

| Value | Sending data #1 | Sending data #2 |
|-------|-----------------|-----------------|
| -2j | 1 - j | 1 + j |
| 2 | 1 - j | 1 - j |
| -2 | -1 + j | 1 + j |
| ... | ... | ... |

Table 7B

| Value | Sending data #1 | Sending data #2 |
|-------|-----------------|-----------------|
| 2j | -1 - j | -1 + j |
| -2j | -1 + j | -1 - j |
| 2 | -1 + j | -1 + j |
| -2 | 1 + j | -1 - j |
| ... | ... | ... |

For Table 7A and Table 7B, refer to the related descriptions of Table 6. Details are not described herein again.

In another example, the first correspondence may be represented by a set.

For example, when the first group of signals includes a reception signal corresponding to sending data #1, and the second group of signals includes a reception signal corresponding to sending data #2, the first correspondence may include {value: 2j; sending data #1: 1 - j; sending data #2: 1 + j}; {value: - 2j; sending data #1: 1 + j; sending data #2: 1 - j}; {value: 2; sending data #1: 1 - j; sending data #2: 1 - j}; {value: -2; sending data #1: 1 + j; sending data #2: -1 - j}; ...

Alternatively, the first correspondence may include {value: 2j; sending data #1: -1 + j; sending data #2: -1 - j}; {value: - 2j; sending data #1: -1 - j; sending data #2: -1 + j}; {value: 2; sending data #1: -1 + j; sending data #2: -1 + j}; {value: -2; sending data #1: -1 - j; sending data #2: 1 + j}; ...

When the first group of signals includes a reception signal corresponding to sending data #2, and the second group of signals includes a reception signal corresponding to sending data #1, the first correspondence may include {value: 2j; sending data #1: 1 + j; sending data #2: 1 - j}; {value: -2j; sending data #1: 1 - j; sending data #2: 1 + j}; {value: 2; sending data #1: 1 - j; sending data #2: 1 - j}; {value: -2; sending data #1: -1 + j; sending data #2: 1 + j}; ...

Alternatively, the first correspondence may include {value: 2j; sending data #1: -1 - j; sending data #2: -1 + j}; {value: - 2j; sending data #1: -1 + j; sending data #2: -1 - j}; {value: 2; sending data #1: -1 + j; sending data #2: -1 + j}; {value: -2; sending data #1: 1 + j; sending data #2: -1 - j}; ...

The foregoing merely describes examples of the first correspondence in a case in which the value of X is 1 and the joint operation includes multiplication on the second signal and the conjugate value of the first group of signals. The implementation of the first correspondence in a case in which the value of X is another value except 1 or in a case in which the joint operation includes division on the first group of signals and the second signal is similar to the implementation of the first correspondence in a case in which the value of X is 1 and the joint operation includes multiplication on the second signal and the conjugate value of the first group of signals. For specific implementation, refer to the related descriptions of the first correspondence in a case in which the value of X is 1 and the joint operation includes multiplication on the second signal and the conjugate value of the first group of signals. Details are not described herein again.

Optionally, determining, based on the first value, the sending data separately corresponding to the plurality of reference signals includes: determining a plurality of pieces of data corresponding to the first value in a first correspondence as the sending data separately corresponding to the plurality of reception signals, where the first correspondence includes a correspondence between a value and a plurality of pieces of data. For example, the first correspondence is represented by using an example in which the first value is 2 in Table 6. In this case, according to Table 6A, the sending signal #1 is 1 - j, and the sending signal #2 is 1 - j.

Optionally, after the plurality of second sending signals are obtained according to step S1501 to step S1503, PHN in the process of transmitting data by the transmit-end device to the receive-end device may be determined based on the second sending signals and the reception signals corresponding to the second sending signals (that is, the plurality of reception signals in step S1501 to step S1503). Further, the reception signals corresponding to the first sending signals are demodulated based on the PHN, to obtain the plurality of first sending signals. For example, a process in which the receive-end device demodulates the reception signals corresponding to the first sending signals is similar to the process in which the eighth data bit is processed to obtain the data bit 1 in (b) in FIG. 12. For details, refer to the related descriptions in (b) in FIG. 12. Details are not described herein again.

It may be understood that, in the foregoing embodiments, the methods and/or steps implemented by the receive-end device may alternatively be implemented by a component (such as a processor, a chip, a chip system, a circuit, a logic module, or software like a chip or a circuit) that can be used in the receive-end device; and the methods and/or steps implemented by the transmit-end device may alternatively be implemented by a component (such as a processor, a chip, a chip system, a circuit, a logic module, or software like a chip or a circuit) that can be used in the transmit-end device.

The foregoing mainly describes the solutions provided in this application. Correspondingly, this application further provides a communication apparatus, and the communication apparatus is configured to implement the foregoing methods. The communication apparatus may be the transmit-end device in the foregoing method embodiments, or an apparatus including the transmit-end device, or a component that can be used in the transmit-end device, for example, a chip or a chip system. Alternatively, the communication apparatus may be the receive-end device in the foregoing method embodiments, or an apparatus including the receive-end device, or a component that can be used in the receive-end device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

FIG. 16 is a diagram of a structure of a communication apparatus 160. The communication apparatus 160 includes a processing module 1601 and a transceiver module 1602. The communication apparatus 160 may be configured to implement a function of the transmit-end device or the receive-end device.

In some embodiments, the communication apparatus 160 may further include a storage module (not shown in FIG. 16) configured to store program instructions and data.

In some embodiments, the transceiver module 1602 may also be referred to as a transceiver unit, and is configured to implement a sending function and/or a receiving function. The transceiver module 1602 may include a transceiver circuit, a transceiver device, a transceiver, or a communication interface.

In some embodiments, the transceiver module 1602 may include a receiving module and a sending module that are respectively configured to perform receiving steps and sending steps performed by the transmit-end device or the receive-end device in the foregoing method embodiments, and/or configured to support another process of the technology described in this specification. The processing module 1601 may be configured to perform processing (for example, determining and generating) steps performed by the transmit-end device or the receive-end device in the foregoing method embodiments, and/or configured to support another process of the technology described in this specification.

In a case that the communication apparatus 160 is configured to implement a function of the receive-end device: In some embodiments, the transceiver module 1602 is configured to receive a plurality of reception signals, where the plurality of reception signals include a first group of signals and a second group of signals, and the first group of signals and the second group of signals each include at least one reception signal; the processing module 1601 is configured to perform a joint operation on the first group of signals and the second group of signals, to obtain a first value; and the processing module 1601 is further configured to determine, based on the first value, sending data separately corresponding to the plurality of reception signals.

Optionally, the processing module 1601 is further configured to determine a plurality of pieces of data corresponding to the first value in a first correspondence as the sending data separately corresponding to the plurality of reception signals, where the first correspondence includes a correspondence between a value and a plurality of pieces of data.

Optionally, the processing module 1601 is further configured to combine the first group of signals to obtain a first combined signal corresponding to the first group of signals, where the first combined signal is a result obtained by performing at least one of multiplication, addition, subtraction, and division on the first group of signals; combine the second group of signals to obtain a second combined signal corresponding to the second group of signals, where the second combined signal is a result obtained by performing at least one of multiplication, addition, subtraction, and division on the second group of signals; and perform the joint operation on the first combined signal and the second combined signal, to obtain the first value.

All related content of the steps in the foregoing method embodiments may be cited in function descriptions of the corresponding functional modules. Details are not described herein again.

In this application, the communication apparatus 160 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 160 in FIG. 16 is a chip or a chip system, a function/implementation process of the transceiver module 1602 may be implemented through an input/output interface (or a communication interface) of the chip or the chip system, and a function/implementation process of the processing module 1601 may be implemented by using a processor (or a processing circuit) of the chip or the chip system.

The communication apparatus 160 provided in embodiments may perform the foregoing methods. Therefore, for technical effects that can be achieved by the communication apparatus 160, refer to the foregoing method embodiments. Details are not described herein again.

In a possible product form, the transmit-end device or the receive-end device in embodiments of this application may be implemented by the following: one or more field programmable gate arrays (field programmable gate array, FPGA), a programmable logic device (programmable logic device, PLD), a controller, a state machine, gate logic, a discrete hardware component, any other appropriate circuit, or any combination of circuits that can perform various functions described in this application.

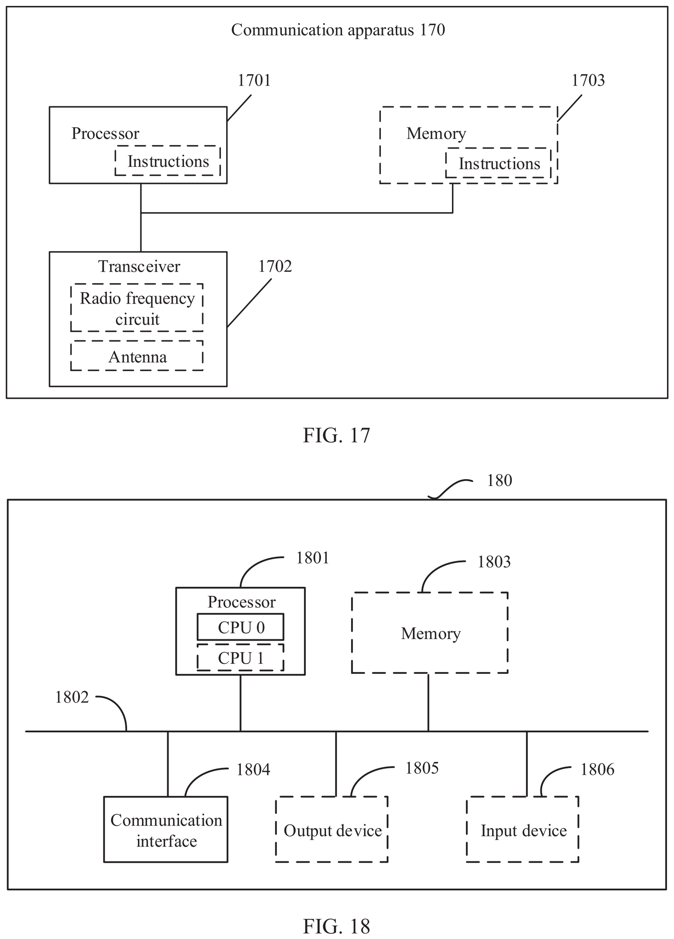

In another possible product form, the transmit-end device or the receive-end device in embodiments of this application may be implemented by using a general bus architecture. For ease of description, FIG. 17 is a diagram of a structure of a communication apparatus 170 according to an embodiment of this application. The communication apparatus 170 includes a processor 1701 and a transceiver 1702. The communication apparatus 170 may be a transmit-end device, or a chip or a chip system in the transmit-end device. Alternatively, the communication apparatus 170 may be a receive-end device, or a chip or a module in the receive-end device. FIG. 17 shows only main components in the communication apparatus 170. In addition to the processor 1701 and the transceiver 1702, the communication apparatus may further include a memory 1703 and an input/output apparatus (not shown in FIG. 17).

Optionally, the processor 1701 is mainly configured to process a communication protocol and communication data, control the entire communication apparatus, execute a software program, and process data of the software program. The memory 1703 is mainly configured to store the software program and the data. The transceiver 1702 may include a radio frequency circuit and an antenna. The radio frequency circuit is mainly configured to perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display, or a keyboard, is mainly configured to receive data input by a user and output data to the user.

Optionally, the processor 1701, the transceiver 1702, and the memory 1703 may be connected through a communication bus.

After the communication apparatus is powered on, the processor 1701 may read a software program in the memory 1703, interpret and execute instructions of the software program, and process data of the software program. When data needs to be sent wirelessly, the processor 1701 performs baseband processing on the to-be-sent data, and then outputs a baseband signal to a radio frequency circuit. The radio frequency circuit performs radio frequency processing on the baseband signal, and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1701. The processor 1701 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in a hardware implementation, a person skilled in the art may figure out that the communication apparatus 160 may be in a form of the communication apparatus 170 shown in FIG. 17.

In an example, the function/implementation process of the processing module 1601 in FIG. 16 may be implemented by the processor 1701 in the communication apparatus 170 shown in FIG. 17 calling the computer-executable instructions stored in the memory 1703. The function/implementation process of the transceiver module 1602 in FIG. 16 may be implemented by the transceiver 1702 in the communication apparatus 170 shown in FIG. 17.

In still another possible product form, the transmit-end device or the receive-end device in this application may be of a composition structure shown in FIG. 18, or include components shown in FIG. 18. FIG. 18 is a diagram of composition of a communication apparatus 180 according to this application. The communication apparatus 180 may be a transmit-end device, or a chip or a system on chip in the transmit-end device; or may be a receive-end device, or a module, a chip, or a system on chip in the receive-end device.

As shown in FIG. 18, the communication apparatus 180 includes at least one processor 1801 and at least one communication interface (in FIG. 18, an example in which one communication interface 1804 and one processor 1801 are included is used only for description). Optionally, the communication apparatus 180 may further include a communication bus 1802 and a memory 1803.

The processor 1801 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1801 may be another apparatus with a processing function, such as a circuit, a component, or a software module. This is not limited.

The communication bus 1802 is configured to connect different components of the communication apparatus 180, to enable communication between different components. The communication bus 1802 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 18, but this does not mean that there is only one bus or only one type of bus.

The communication interface 1804 is configured to communicate with another device or a communication network. For example, the communication interface 1804 may be a module, a circuit, a transceiver, or any apparatus that can implement communication. Optionally, the communication interface 1804 may be an input/output interface located in the processor 1801, and is configured to implement signal inputting and signal outputting of the processor.

The memory 1803 may be an apparatus with a storage function, and is configured to store instructions and/or data. The instructions may be computer programs.

For example, the memory 1803 may be a read-only memory (read-only memory, ROM) or another type of static storage device that can store static information and/or instructions; or may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or the like. This is not limited.

It should be noted that the memory 1803 may exist independently of the processor 1801, or may be integrated with the processor 1801. The memory 1803 may be located inside the communication apparatus 180, or may be located outside the communication apparatus 180. This is not limited. The processor 1801 may be configured to execute the instructions stored in the memory 1803, to implement the method provided in the following embodiments of this application.

In an optional implementation, the communication apparatus 180 may further include an output device 1805 and an input device 1806. The output device 1805 communicates with the processor 1801, and may display information in a plurality of manners. For example, the output device 1805 may be a liquid crystal display (liquid crystal display, LCD), a light-emitting diode (light-emitting diode, LED) display device, a cathode ray tube (cathode ray tube, CRT) display device, a projector (projector), or the like. The input device 1806 communicates with the processor 1801, and may receive an input from a user in a plurality of manners. For example, the input device 1806 may be a mouse, a keyboard, a touchscreen device, or a sensing device.

In some embodiments, in a hardware implementation, a person skilled in the art may figure out that the communication apparatus 160 may be in a form of the communication apparatus 180 shown in FIG. 18.

In an example, the function/implementation process of the processing module 1601 in FIG. 16 may be implemented by the processor 1801 in the communication apparatus 180 shown in FIG. 18 calling the computer-executable instructions stored in the memory 1803. The function/implementation process of the transceiver module 1602 in FIG. 16 may be implemented by the communication interface 1804 in the communication apparatus 180 shown in FIG. 18.

It should be noted that the structure shown in FIG. 18 does not constitute a specific limitation on the transmit-end device or the receive-end device. For example, in some other embodiments of this application, the transmit-end device or the receive-end device may include more or fewer components than those shown in the figure, or some components may be combined, or some components may be split, or different component arrangements may be used. The components shown in the figure may be implemented by hardware, software, or a combination of software and hardware.

In some embodiments, an embodiment of this application further provides a communication apparatus. The communication apparatus includes a processor configured to implement the method in any one of the foregoing method embodiments.

In a possible implementation, the communication apparatus further includes a memory. The memory is configured to store a necessary computer program and data. The computer program may include instructions. The processor may call the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium storing a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separated, that is, may be located together in one place or distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When implemented by using a software program, all or some of the foregoing embodiments may be implemented in a form of a computer program product. The computer program product includes one or more computer instructions. When the computer program instructions are loaded and executed on a computer, all or some of the procedure or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce great effects.

Although this application is described with reference to specific features and embodiments thereof, it is clear that various modifications and combinations may be made without departing from the scope of this application. Correspondingly, this specification and the accompanying drawings are merely example descriptions of this application defined by the appended claims, and are considered as any or all of modifications, variations, combinations, or equivalents that cover the scope of this application. It is clear that a person skilled in the art can make various modifications and variations to this application without departing from the scope of this application. This application is intended to cover these modifications and variations of this application provided that they fall within the scope of the claims of this application and their equivalent technologies.

**Claims**

1. A communication method, wherein the method comprises:

   receiving a plurality of reception signals, wherein the plurality of reception signals comprise a first group of signals and a second group of signals, and the first group of signals and the second group of signals each comprise at least one reception signal;
   performing a joint operation on the first group of signals and the second group of signals, to obtain a first value; and
   determining, based on the first value, sending data separately corresponding to the plurality of reception signals.

2. The method according to claim 1, wherein the joint operation comprises multiplication on the second group of signals and a conjugate value of the first group of signals.

3. The method according to claim 1, wherein the joint operation comprises division on the first group of signals and the second group of signals.

4. The method according to any one of claims 1 to 3, wherein determining, based on the first value, the sending data separately corresponding to the plurality of reference signals comprises:
   determining a plurality of pieces of data corresponding to the first value in a first correspondence as the sending data separately corresponding to the plurality of reception signals, wherein the first correspondence comprises a correspondence between a value and a plurality of pieces of data.

5. The method according to any one of claims 1 to 4, wherein performing the joint operation on the first group of signals and the second group of signals, to obtain the first value comprises:

   combining the first group of signals to obtain a first combined signal corresponding to the first group of signals, wherein the first combined signal is a result obtained by performing at least one of multiplication, addition, subtraction, and division on the first group of signals;
   combining the second group of signals to obtain a second combined signal corresponding to the second group of signals, wherein the second combined signal is a result obtained by performing at least one of multiplication, addition, subtraction, and division on the second group of signals; and
   performing the joint operation on the first combined signal and the second combined signal, to obtain the first value.

6. The method according to any one of claims 1 to 5, wherein a quantity of reception signals in the first group of signals and a quantity of reception signals in the second group of signals are both even.

7. The method according to any one of claims 1 to 6, wherein the reception signal is a single-carrier signal, and the single-carrier signal comprises a single-carrier offset quadrature amplitude modulation SC-OQAM signal, a single-carrier quadrature amplitude modulation SC-QAM signal, and a discrete Fourier transform-spread-orthogonal frequency division multiplexing DFT-s-OFDM signal.

8. The method according to any one of claims 1 to 7, wherein the plurality of reception signals are located in a same resource block RB, or the plurality of reception signals are located in adjacent RBs.

9. The method according to any one of claims 1 to 8, wherein the first group of signals comprises a first reception signal and a second reception signal, the first reception signal is a reception signal corresponding to a real part of first sending data, and the second reception signal is a reception signal corresponding to an imaginary part of the first sending data; and/or
   the second group of signals comprises a third reception signal and a fourth reception signal, the third reception signal is a reception signal corresponding to a real part of second sending data, and the fourth reception signal is a reception signal corresponding to an imaginary part of the second sending data.

10. A communication apparatus, wherein the communication apparatus comprises a transceiver module and a processing module;

the transceiver module is configured to perform a reception action or a sending action in the method according to any one of claims 1 to 9; and
the processing module is configured to perform a processing action in the method according to any one of claims 1 to 9.

11. A communication apparatus, wherein the communication apparatus comprises a processor, and the processor is configured to run a computer program or instructions, to enable the communication apparatus to perform the method according to any one of claims 1 to 9.

12. A computer-readable storage medium, wherein the computer-readable storage medium stores computer instructions or a program, and when the computer instructions or the program is run on a computer, the method according to any one of claims 1 to 9 is performed.

13. A computer program product, wherein when the computer program product is run on a communication apparatus, the communication apparatus is enabled to perform the method according to any one of claims 1 to 9.

14. A chip, comprising a processor, wherein the processor is coupled to a memory, the memory is configured to store a program or instructions, and when the program or the instructions are executed by the processor, the chip is enabled to perform the method according to any one of claims 1 to 9.

FIG. 1

FIG. 2

```
Serial-to-
parallel
    │
    ▼
N-point
discrete
Fourier
transform
    │
    ▼
Subcarrier
mapping
    │
    ▼
M-point
inverse
discrete
Fourier
transform
    │
    ▼
Parallel-
to-
serial
    │
    ▼
Cyclic
prefix
addition
    │
    ▼
Digital-to-
analog
converter/
Radio
frequency
    │
    ▼
Channel
```

```
Parallel-
to-serial
    ◄
N-point
inverse
discrete
Fourier
transform
    ◄
Subcarrier
demapping/
Equalization
    ◄
M-point
discrete
Fourier
transform
    ◄
Serial-
to-
parallel
    ◄
Cyclic
prefix
removal
    ◄
Radio
frequency/
Analog-to-
digital
converter
```

FIG. 3

```
┌─────────────┐      ┌─────────────┐      ┌───────────────┐      ┌────────────────┐
│  Modulation │ ───► │  Upsampling │ ───► │ Pulse shaping │ ───► │  Downsampling  │
└─────────────┘      └─────────────┘      └───────────────┘      └────────────────┘
```

(a)

```
┌─────────────┐      ┌─────────────┐      ┌─────────────┐
│  Modulation │ ──┬─►│  Real part  │ ───► │  Upsampling │ ──────────────────┐
└─────────────┘   │  └─────────────┘      └─────────────┘                   │     ┌───────────────┐      ┌────────────────┐
                  │                                                         ├────►│ Pulse shaping │ ───► │  Downsampling  │
                  │  ┌──────────────┐     ┌─────────────┐     ┌───────────┐ │     └───────────────┘      └────────────────┘
                  └─►│Imaginary part│ ───►│  Upsampling │ ───►│ T/2 delay │─┘
                     └──────────────┘     └─────────────┘     └───────────┘
```

(b)

FIG. 4

FIG. 5

FIG. 6

Modulation (N) → Real part → Upsampling → Fourier transform (2N)

Imaginary part → Upsampling → One delay → Fourier transform (2N)

Fourier transform (2N) —J→ Subcarrier mapping —M→ Inverse Fourier transform —M→

FIG. 7

Filter

FIG. 8

FIG. 9

FIG. 10

```
┌──────────────┐     ┌──────────────┐   ┌──────────┐
│ First data bit│───▶│  Modulation  │──▶│          │
└──────────────┘     └──────────────┘   │          │     ┌─────────┐   ┌──────────┐   ┌────────┐   ┌──────────┐
                                        │  Fourier │────▶│ Mapping │──▶│ Inverse  │──▶│ Cyclic │──▶│  Radio   │──▶ Send
┌──────────────┐     ┌──────────────┐   │ transform│     └─────────┘   │ Fourier  │   │ prefix │   │frequency │
│     PTRS     │───▶│  Modulation  │──▶│          │                    │transform │   └────────┘   └──────────┘
└──────────────┘     └──────────────┘   └──────────┘                    └──────────┘
```

(a)

```
┌──────────────┐     ┌──────────────┐   ┌──────────┐
│ First data bit│◀───│ Demodulation │◀──│          │
└──────────────┘     └──────────────┘   │          │    ┌──────────┐   ┌──────────┐   ┌──────────┐   ┌──────────┐
                         ▲              │ Inverse  │◀───│Demapping │◀──│ Fourier  │◀──│  Cyclic  │◀──│  Radio   │◀── Receive
┌──────────────┐     ┌──────────────┐   │ Fourier  │    └──────────┘   │transform │   │  prefix  │   │frequency │
│     PHN      │◀───│ Demodulation │◀──│transform │                    └──────────┘   │ removal  │   └──────────┘
└──────────────┘     └──────────────┘   └──────────┘                                   └──────────┘
```

(b)

FIG. 11

(a)

(b)

FIG. 12

| Transmit-end device | Receive-end device |

FIG. 13

Network device #1

Network device #2

Network device #3

Terminal device #1

(a)

Network device #4

Terminal device #2

Terminal device #3

(b)

FIG. 14

EP 4 734 403 A1

| Transmit-end device | | Receive-end device |

S1501: A plurality of sending signals

S1501: Receive reception signals respectively corresponding to the plurality of sending signals, that is, receive a plurality of reception signals, where the plurality of reception signals include a first group of signals and a second group of signals, and the first group of signals and the second group of signals each include at least one reception signal

S1502: Perform a joint operation on the first group of signals and the second group of signals, to obtain a first value

S1503: Determine, based on the first value, sending data separately corresponding to the plurality of reception signals

FIG. 15

Communication apparatus          160

Processing module          1601

Transceiver module          1602

FIG. 16

Communication apparatus 170

1701

Processor

Instructions

1703

Memory

Instructions

Transceiver

1702

Radio frequency
circuit

Antenna

FIG. 17

180

1801

Processor

CPU 0

CPU 1

1803

Memory

1802

1804

Communication
interface

1805

Output device

1806

Input device

FIG. 18

# EP 4 734 403 A1

## INTERNATIONAL SEARCH REPORT

| International application No. |
| --- |
| **PCT/CN2023/118078** |

**A. CLASSIFICATION OF SUBJECT MATTER**

H04B 10/61(2013.01)i

According to International Patent Classification (IPC) or to both national classification and IPC

**B. FIELDS SEARCHED**

Minimum documentation searched (classification system followed by classification symbols)

IPC:H04B H04L

Documentation searched other than minimum documentation to the extent that such documents are included in the fields searched

Electronic data base consulted during the international search (name of data base and, where practicable, search terms used)

CNTXT, WPABSC, ENTXT, VEN, CNKI, IEEE, 3GPP: 发送, 接收, 第二, 第2, 两, 另一, 信号, 计算, 运算, 数值, 常数, 对应, 映射, 共轭, 相乘, 乘法, 乘以, 相除, 除法, 除以, 相位噪声, 相噪, 解调, send, transmit, reception, receive, second, signal, multiply, divide, constant, corresponding, PHN, demodulation, SC-OQAM, SC-QAM, DFT-s-OFDM

**C. DOCUMENTS CONSIDERED TO BE RELEVANT**

| Category* | Citation of document, with indication, where appropriate, of the relevant passages | Relevant to claim No. |
| --- | --- | --- |
| A | CN 102291346 A (CHONGQING JINMEI COMMUNICATION CO., LTD.) 21 December 2011 (2011-12-21) description, paragraphs [0004]-[0017] | 1-14 |
| A | CN 116319197 A (HUAWEI TECHNOLOGIES CO., LTD.) 23 June 2023 (2023-06-23) description, paragraphs [0097]-[0180] | 1-14 |
| A | CN 114629762 A (HUAWEI TECHNOLOGIES CO., LTD.) 14 June 2022 (2022-06-14) entire document | 1-14 |
| A | CN 115499111 A (HUAWEI TECHNOLOGIES CO., LTD.) 20 December 2022 (2022-12-20) entire document | 1-14 |
| A | US 2014247747 A1 (TELEFONAKTIEBOLAGET L M ERICSSON (PUBL)) 04 September 2014 (2014-09-04) entire document | 1-14 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **15 May 2024** | **21 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 734 403 A1

**INTERNATIONAL SEARCH REPORT**
**Information on patent family members**

International application No.

**PCT/CN2023/118078**

| Patent document cited in search report | | | Publication date (day/month/year) | Patent family member(s) | | | Publication date (day/month/year) |
|---|---|---|---|---|---|---|---|
| CN | 102291346 | A | 21 December 2011 | None | | | |
| CN | 116319197 | A | 23 June 2023 | WO | 2023116613 | A1 | 29 June 2023 |
| CN | 114629762 | A | 14 June 2022 | WO | 2022127775 | A1 | 23 June 2022 |
| | | | | EP | 4250654 | A1 | 27 September 2023 |
| | | | | US | 2023327936 | A1 | 12 October 2023 |
| CN | 115499111 | A | 20 December 2022 | WO | 2022262575 | A1 | 22 December 2022 |
| | | | | US | 2024113836 | A1 | 04 April 2024 |
| | | | | EP | 4351062 | A1 | 10 April 2024 |
| US | 2014247747 | A1 | 04 September 2014 | WO | 2013055268 | A1 | 18 April 2013 |
| | | | | EP | 2777185 | A1 | 17 September 2014 |

Form PCT/ISA/210 (patent family annex) (July 2022)